# EUROPEAN PATENT APPLICATION

(11) **EP 2 813 939 A1**
(43) Date of publication of application: **17.12.2014**
(21) Application number: 14172218.1
(22) Date of filing: 12.06.2014
(51) Int. Cl.: G06F 3/0488, G06F 3/0354

(54) **Handwriting input apparatus, non-transitory computer-readable storage medium and control method**

(30) Priority: 13.06.2013 JP 2013124277
(71) Applicant: Konica Minolta, Inc., Tokyo 100-7015 (JP)
(72) Inventor: Yamaguchi, Yasuhiko, Tokyo, 100-7015 (JP); Hyodo, Keiichiro, Tokyo, 100-7015 (JP); Hosaka, Kenta, Tokyo, 100-7015 (JP); Inoue, Masayuki, Tokyo, 100-7015 (JP); Niwa, Takamasa, Tokyo, 100-7015 (JP)
(74) Representative: Henkel, Breuer & Partner

(57) **Abstract**

Provided are a handwriting input apparatus, a non-transitory computer-readable storage medium storing a control program, and a control method. A handwriting input apparatus includes: a touch panel and a control section configured to allow a user to choose a modification mode from a first mode and a second mode, where the modification mode is used when a first pattern is inputted through the touch panel to be applied to handwriting information. The first mode is a mode to delete the first pattern and a certain part of the handwriting information corresponding to the first pattern. The second mode is a mode to add the first pattern onto the handwriting information. The control section is configured to, in response to the touch panel receiving an input of the first pattern to be applied to handwriting information, modify the handwriting information according to the modification mode.

## Description

This application is based on Japanese Patent Application No. 2013-124277 filed on June 13, 2013, in the Japan Patent Office, the entire content of which is hereby incorporated by reference.

### TECHNICAL FIELD

The present invention relates to a handwriting input apparatus, a non-transitory computer-readable storage medium storing a control program, and a control method. In particular, the present invention relates to a handwriting input apparatus configured to convert handwriting information inputted on a sheet into electronic data, a non-transitory computer-readable storage medium storing a control program to be used for controlling operations of the handwriting input apparatus, and a control method for controlling operations of the handwriting input apparatus.

### BACKGROUND

In recent years, various kinds of handwriting input apparatuses, each of which is provided with a function for storing or outputting information including characters and figures handwritten on a sheet of paper (hereinafter, referred to as handwriting information) in a form of electronic data (hereinafter, referred to as handwriting data), have been put on the market. This kind of handwriting input apparatus is provided with a pressure-sensitive touch panel, so that, when a user inputs handwriting information onto the touch panel or a sheet of paper fixedly placed on the touch panel by using a pen, the touch panel detects a pressure of the pen so as to make it possible to store the moving locus of the touch position as the electronic data.

In the handwriting input apparatus as above-mentioned, since a user sometimes may modify the contents of the handwriting information, various kinds of methods for making it possible to edit the handwriting information have been proposed so far. For instance, Japanese Translation of PCT International Application Publication No. 2010-511260 sets forth an error correction method of a touch screen, including the steps of: receiving an inputting stroke; when determining that the inputting stroke is an erasing action, implementing a correcting operation based on the erasing action above-mentioned; and displaying characters, corrected by the erasing action, onto the touch screen.

To modify handwriting information displayed on a touch panel in a handwriting input apparatus provided with a display function, a user may give instructions to paint out the designated region of the displayed information with a background color (to use a so-called erasing function), or input a specific pattern (for instance, a line to cross out the displayed information, namely a strikethrough) by handwriting. When the user instructs the handwriting input apparatus to modify the handwringing information by inputting a strikethrough on that occasion, the handwriting input apparatus can output the handwringing information together with the strikethrough on its display or can output modified handwriting information with its portion where the strikethrough is added erased, on the display. It means that the handwriting input apparatus do not always display or store the handwriting information modified as the user intended.

To modify handwriting information written on a sheet of paper in a handwriting input apparatus provided with no display function, a user may partially erase the handwriting information by using an eraser tool, or input a specific pattern (for instance, a strikethrough) by handwriting. On that occasion, without a correct judgment about a tool, which is an eraser tool or a pen, used for touch on the sheet, the handwriting input apparatus hardly modifies the handwriting information as the user intended. Still further, as well as the aforementioned, when the user instructs the handwriting input apparatus to modify the handwringing information by using a strikethrough on that occasion, the handwriting input apparatus can store the handwringing information together with a strikethrough or can store modified handwriting information with its portion where the strikethrough is added erased. It means that the handwriting input apparatus do not always store the handwriting information modified as the user intended.

The present invention seeks to solve the problem.

### SUMMARY

There are disclosed illustrative hardwiring input apparatuses, non-transitory computer-readable storage media each storing a control program, and control methods.

An illustrative handwriting input apparatus reflecting one aspect of the present invention is a handwriting input apparatus comprising: a touch panel configured to receive a handwriting input; and a control section. The control section is configured to allow a user to choose a modification mode from a first mode and a second mode, where the modification mode is used when a first pattern is inputted through the touch panel to be applied to handwriting information which has already been inputted. The first mode is a mode to delete the first pattern and a certain part of the handwriting information corresponding to the first pattern. The second mode is a mode to add the first pattern onto the handwriting information. The control section is configured to, in response to the touch panel receiving an input of the first pattern to be applied to handwriting information which has already been inputted, modify the handwriting information according to the modification mode which has been chosen.

An illustrative non-transitory computer-readable storage medium reflecting one aspect of the present invention stores a control program to be executed in a handwriting input apparatus. The handwriting input apparatus includes a touch panel configured to allow a user to perform a handwriting input thereon. The control program, when being executed by a processor of the handwriting input apparatus, causes the processor to perform the following processes. The processes comprises allowing a user to choose a modification mode from a first mode and a second mode, where the modification mode is used when a first pattern is inputted through the touch panel to be applied to handwriting information which has already been inputted. The first mode is a mode to delete the first pattern and a certain part of the handwriting information corresponding to the first pattern. The second mode is a mode to add the first pattern onto the handwriting information. The processes further comprises determining whether an input received through the touch panel is an input to be applied to handwriting information which has already been inputted; and modifying the handwriting information in response to determining that the input to be applied to the handwriting information has been received. The process of modifying the handwriting information includes, modifying the handwriting information according to the modification mode which has been chosen, in response to determining that an input of the first pattern to be applied to the handwriting information has been received, as a result of the process of determining the input received through the touch panel.

An illustrative control method reflecting one aspect of the present invention is a control method of a handwriting input apparatus including a touch panel configured to receive a handwriting input. The control method comprises allowing a user to choose a modification mode from a first mode and a second mode, where the modification mode is used when a first pattern is inputted through the touch panel to be applied to handwriting information which has already been inputted. The first mode is a mode to delete the first pattern and a certain part of the handwriting information corresponding to the first pattern. The second mode is a mode to add the first pattern onto the handwriting information. The control method further comprises determining whether an input received through the touch panel is an input to be applied to handwriting information which has already been inputted; and modifying the handwriting information in response to determining that the input to be applied to the handwriting information has been received. The process of modifying the handwriting information includes, modifying the handwriting information according to the modification mode which has been chosen, in response to determining that an input of the first pattern to be applied to the handwriting information has been received, as a result of the process of determining the input received through the touch panel.

Other features of illustrative embodiments will be described below.

### BRIEF DESCRIPTION OF THE DRAWINGS

Embodiments will now be described, by way of example only, with reference to the accompanying drawings which are meant to be exemplary, not limiting, and wherein like elements numbered alike in several figures, in which:
FIG. 1A and FIG. 1B are schematic diagrams illustrating structural outer appearances of a handwriting input apparatus in accordance with Embodiment 1;
FIG. 2 is a block diagram illustrating a configuration of a handwriting input apparatus in accordance with Embodiment 1;
FIG. 3 is a flowchart illustrating a flow of processing to be conducted in a handwriting input apparatus in accordance with Embodiment 1;
FIG. 4 is a flowchart illustrating a flow of processing (processing of determining a strikethrough) to be conducted in a handwriting input apparatus in accordance with Embodiment 1;
FIG. 5A and FIG. 5B are schematic diagrams illustrating relationships between handwriting information and electronic data, in a case where no modification is applied thereto;
FIG. 6A, FIG. 6B, FIG. 6C and FIG. 6D are schematic diagrams illustrating relationships between handwriting information and electronic data, in a case where handwriting information is modified by using a strikethrough;
FIG. 7A, FIG. 7B, FIG. 7C, FIG. 7D, FIG. 7E and FIG. 7F are schematic diagrams illustrating various kinds of strikethrough in accordance with Embodiment 1;
FIG. 8A, FIG. 8B and FIG. 8C are schematic diagrams illustrating relationships between handwriting information and electronic data, in a case where handwriting information is modified by using an eraser;
FIG. 9A and FIG. 9B are schematic diagrams illustrating structural outer appearances of a handwriting input apparatus in accordance with Embodiment 2;
FIG. 10 is a block diagram illustrating a configuration of a handwriting input apparatus in accordance with Embodiment 2;
FIG. 11 is a flowchart illustrating a flow of processing to be conducted in a handwriting input apparatus in accordance with Embodiment 2;
FIG. 12 is a flowchart illustrating a flow of processing (processing of determining a strikethrough) to be conducted in a handwriting input apparatus in accordance with Embodiment 2;
FIG. 13 is a flowchart illustrating a flow of processing (processing of determining an eraser) to be conducted in a handwriting input apparatus in accordance with Embodiment 2;
FIG. 14A and FIG. 14B are schematic diagrams illustrating relationships between handwriting information and electronic data, in a case where no modification is applied thereto;
FIG. 15A, FIG. 15B, FIG. 15C and FIG. 15D are schematic diagrams illustrating relationships between handwriting information and electronic data, in a case where handwriting information is modified by using a strikethrough;
FIG. 16A, FIG. 16B, FIG. 16C, FIG. 16D, FIG. 16E and FIG. 16F are schematic diagrams illustrating various kinds of strikethrough in accordance with Embodiment 2 of the present invention; and
FIG. 17A, FIG. 17B and FIG. 17C are schematic diagrams illustrating relationships between handwriting information and electronic data, in a case where handwriting information is modified by using an eraser.

### DETAILED DESCRIPTION

Illustrative embodiments of control apparatuses, non-transitory computer-readable storage media each storing a control program and control methods will be described with reference to the drawings. It will be appreciated by those of ordinary skill in the art that the description given herein with respect to those figures is for exemplary purposes only and is not intended in any way to limit the scope of potential embodiments may be resolved by referring to the appended claims.

According to any one of handwriting input apparatuses, non-transitory computer-readable storage media each storing a control program and control methods, each of which is in accordance with an embodiment of the present invention, when a user performs an action for modifying handwriting information, it becomes possible to apply the modification to handwriting information in the way the user intended a manner, and then, to display and/or store the modified handwriting information.

This is because, such the handwriting input apparatus, in accordance with the embodiment of the present invention, is configured to allow a user to choose a modification mode to be used when a user inputs a strikethrough, from a mode to delete a part of the handwriting information, residing in an inputted region of the strikethrough and a mode to add the strikethrough onto the handwriting information without deleting the part of the handwriting information, residing in the inputted region of the strikethrough. Thereby, at the time when the strikethrough is inputted, the handwriting input apparatus can modify the handwriting information in accordance with the modification mode currently selected.

Embodiments of the present invention, respectively corresponding to a case where a touch panel, which is provided with a display function, is employed, and another case where another touch panel, which is provided with no display function, is employed, will be detailed separately in the following.

### EMBODIMENT 1:

Under the condition that a user is conducting handwriting with a stylus pen on a touch panel of a handwriting input apparatus equipped with a display function, as described in the descriptions about the background, a modification of handwriting information inputted and displayed on the touch panel, conducted by a user by using an eraser function or a strikethrough, sometimes brings a unwanted result that the handwriting input apparatus does not display and/or store the modified handwriting information as the user intended.

For instance, in a case where a user employed the eraser function for the modification, the handwriting information of the modified part disappears from the touch panel, which means that the handwriting input apparatus displays and/or stores the modified handwriting information as the user intended. On the other hand, in a case where the user modifies the handwriting information displayed on the touch panel by using a strikethrough, the handwriting input apparatus may display and store the handwriting information with the strikethrough added thereto. Alternatively, the handwriting input apparatus may display and store the handwriting information with a part where the strikethrough is added being deleted, which is preferable if the user intends to use the modified handwriting information as a clean copy thereof. However, conventional handwriting input apparatuses are not configured to allow a user to choose whether the modified part of the handwriting information should be maintained or erased, which can causes a problem that the handwriting input apparatus sometimes do not display and/or store the modified handwriting information in the manner that the user intended.

To overcome the above-mentioned problem, the handwriting input apparatus equipped with a display function, in accordance with the present embodiment, has a structure configured to perform the following processing. The handwriting input apparatus allows a user to choose a modification mode to be used when a user conducts a modification operation by using a strikethrough on the touch panel, from a modification mode to display or store handwriting information while adding the strikethrough thereto and another modification mode to display or store handwriting information while deleting a part of the original handwriting information where the strikethrough is added. When receiving a modifying operation onto handwriting information performed on the touch panel by using an eraser function, the handwriting input apparatus displays and/or stores the handwriting information with the modified portion erased. When receiving a modifying operation onto handwriting information performed on the touch panel by using a strikethrough, the handwriting input apparatus displays and/or stores the handwriting information modified according to the modification mode which has been chosen, that is, the handwriting input apparatus displays and/or stores the handwriting information with the strikethrough added thereto or the handwriting information with a part where the strikethrough is added being erased therefrom together with the strikethrough itself.

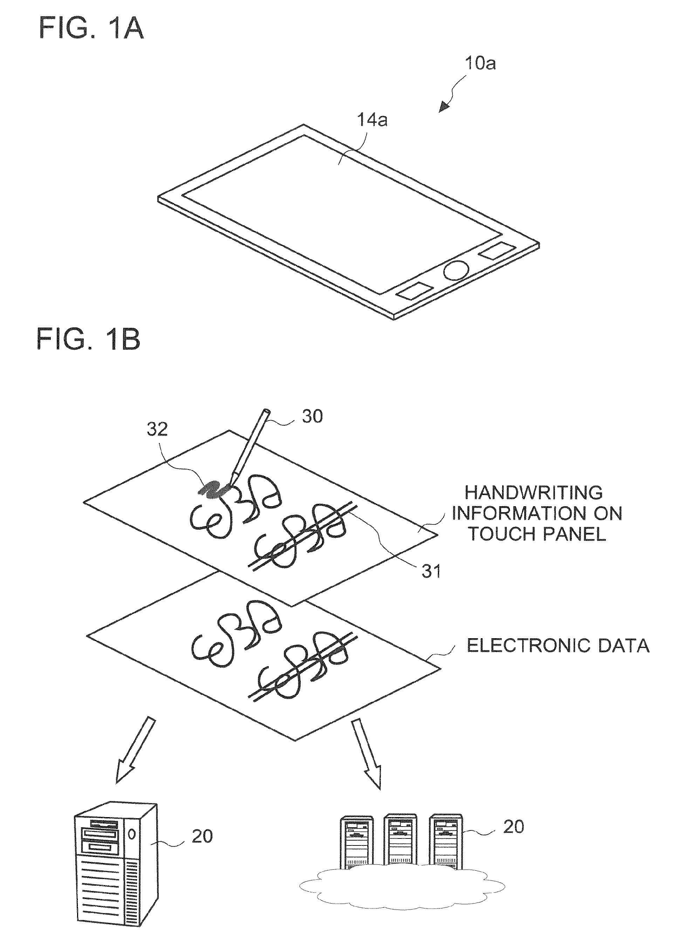

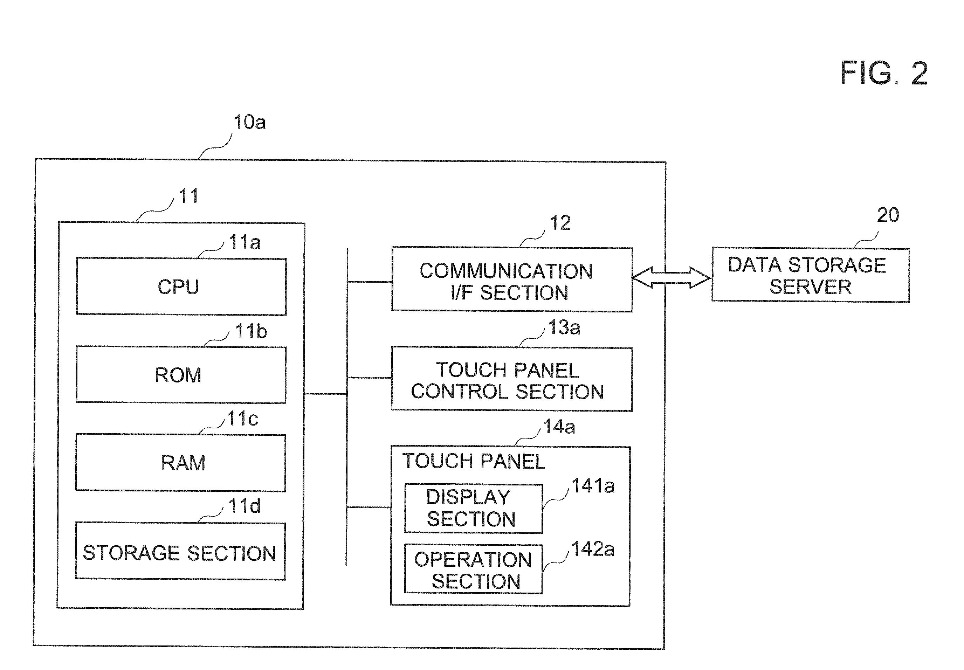

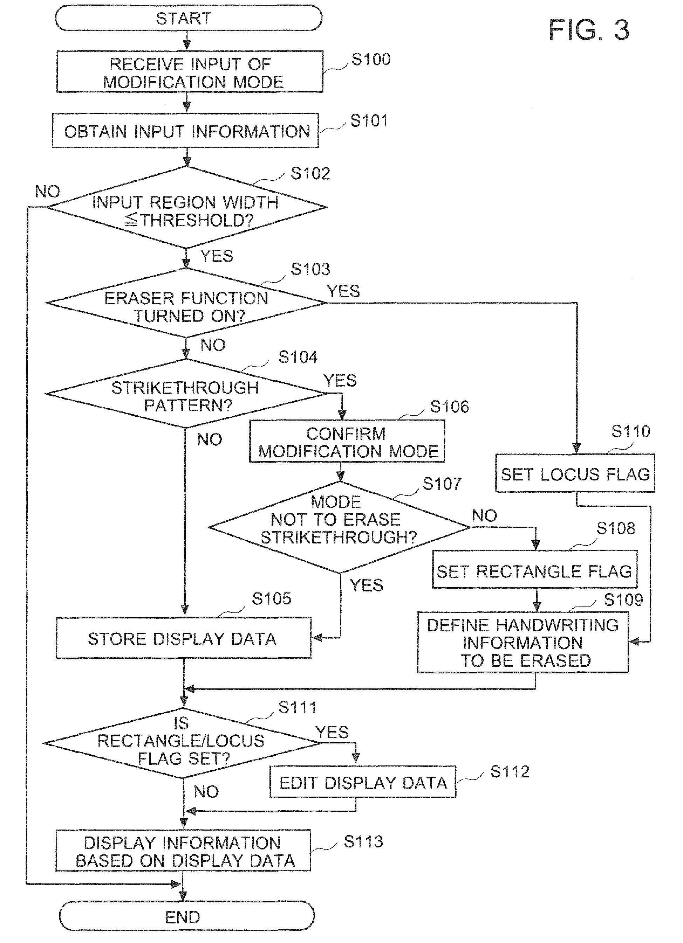

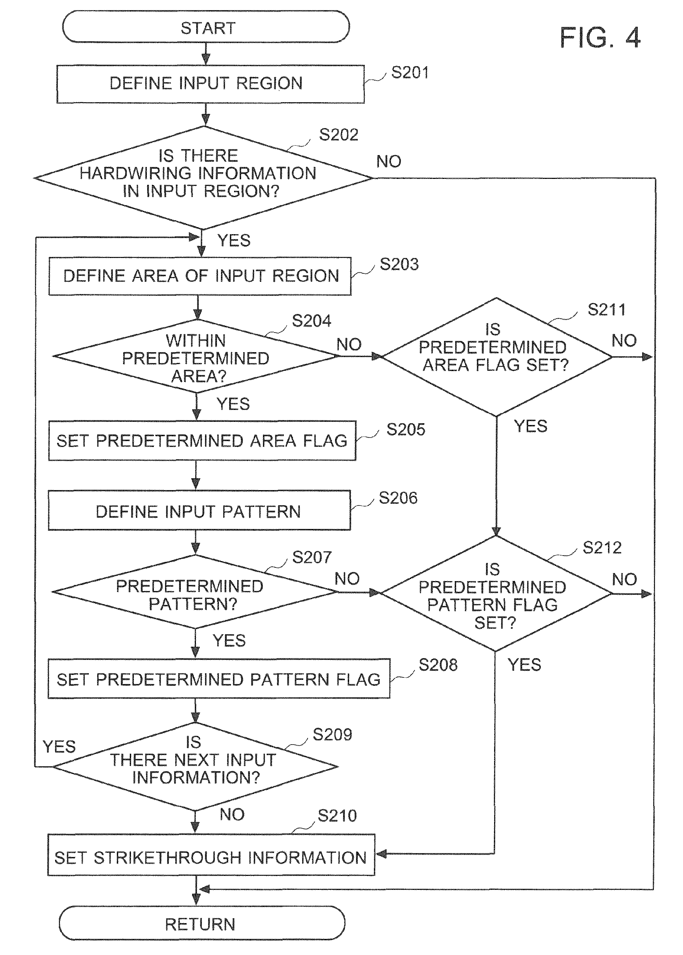

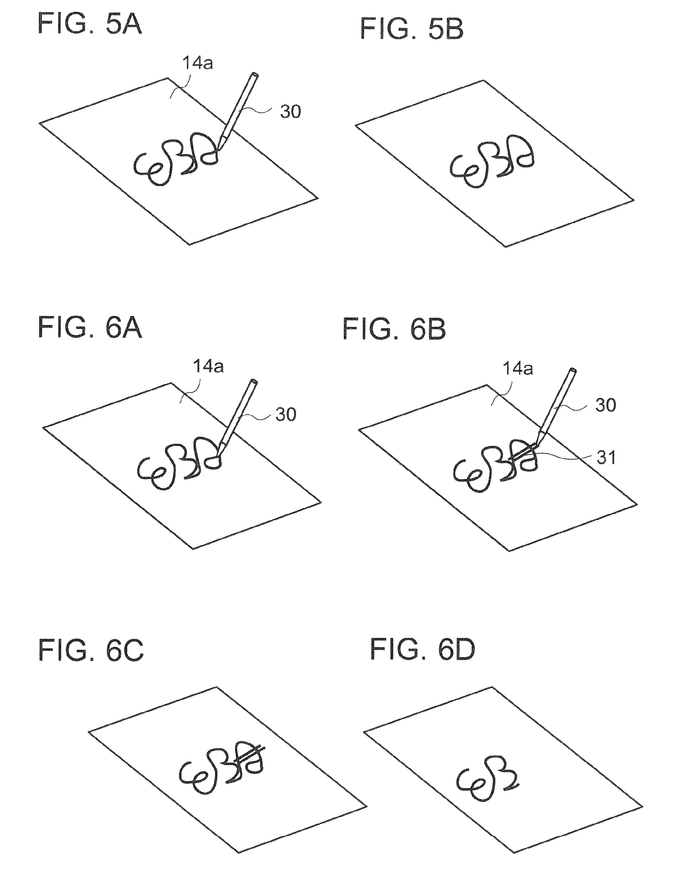

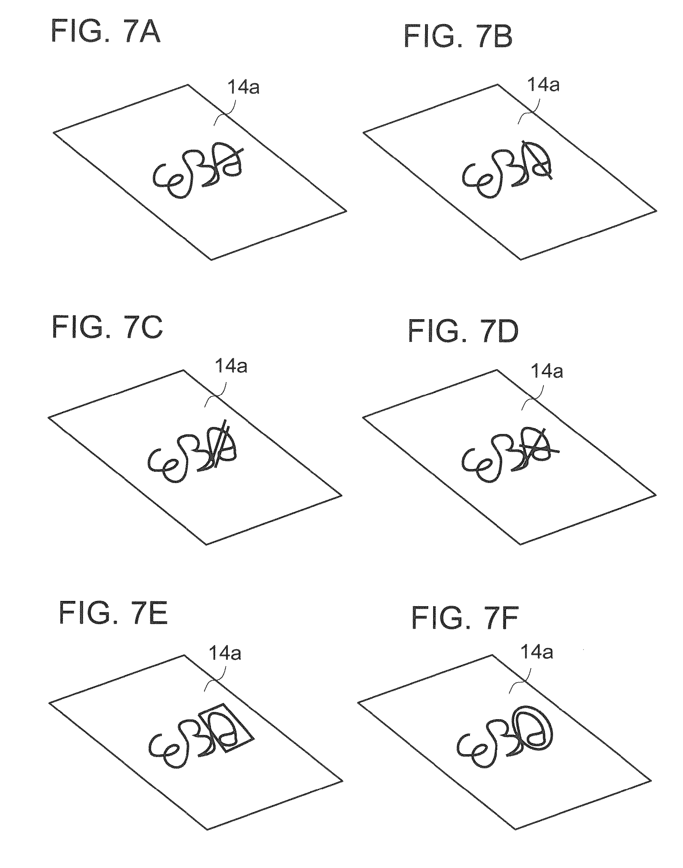

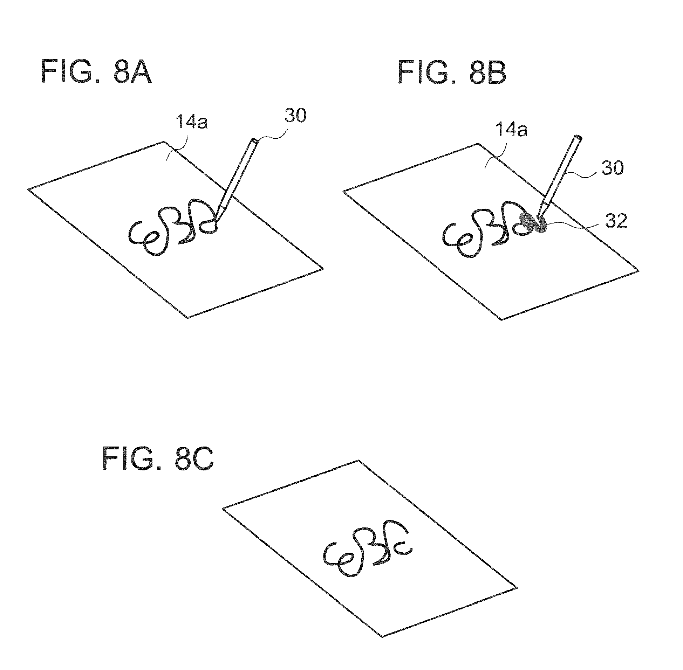

Referring to the drawings shown in FIG. 1A through FIG. 8C, a handwriting input apparatus in accordance with the present embodiment will be detailed in the following. FIG. 1A and FIG. 1B are schematic diagrams illustrating structural outer appearances of the handwriting input apparatus in accordance with the present embodiment, FIG. 2 is a block diagram illustrating a configuration of the handwriting input apparatus in accordance with the present embodiment, and FIG. 3 and FIG. 4 are flowcharts illustrating flows of processing to be conducted in the handwriting input apparatus in accordance with the present embodiment. Further, FIG. 5A, FIG. 5B, FIGs. 6A through 6D and FIGs. 8A through 8C are schematic diagrams illustrating relationships between handwriting information and electronic data, while, FIGs. 7A through 7F, are schematic diagrams illustrating various kinds of strikethroughs.

In this connection, hereinafter, all of information inputted on the touch panel is referred to as input information, and information among the input information, other than various kinds of objects inputted for a modification purpose, such as a strikethrough and an erasing line inputted by using an eraser function, are referred to as handwriting information. In addition, a part of the handwriting information that is to be erased according to a strikethrough or an erasing line is referred to as information to be erased.

As shown in FIG. 1A, a handwriting input apparatus 10a in accordance with the present embodiment, is a device such as a tablet terminal device, a smartphone, and a portable-type computing device, and is provided with a touch panel 14a serving as a pressure sensitive type or an electrostatic type touch panel. Further, the handwriting input apparatus 10a has a structure configured to perform the following processing. As shown in FIG. 1B, when a user performs a handwriting input operation onto the touch panel 14a with his finger or by using a stylus pen 30, the touch panel 14a detects a depressing pressure applied from the finger or the stylus pen 30, and the handwriting input apparatus 10a displays handwriting information (moving locus of the depressed position) thereon and/or outputs the handwriting information as electronic data therefrom. Still further, when a user writes a strikethrough 31 on the handwriting information with his finger or by using the stylus pen 30, or partially erases the handwriting information by using the eraser function (in other words, the user writes erasing lines 32 having a color same as that of the background), the handwriting input apparatus 10a edits the handwriting information according to the control method detailed later, to display the edited handwriting information thereon and/or output the edited handwriting information as electronic data therefrom. Yet further, the handwriting input apparatus 10a stores the electronic data concerned a storage such as an internal storage section thereof and a data storage server 20 installed in an external environment. In this connection, hereinafter in the present embodiment, erasing lines 32 are represented by a dot pattern, for easy recognition of erasing lines 32 having the same color as the background color.

As shown in FIG. 2, the handwriting input apparatus 10a is constituted by a control section 11, a communication I/F (interface) section 12, a touch panel control section 13a and the touch panel 14a.

The control section 11 is constituted by a CPU (Central Processing Unit) 11a, various kinds of storage device including a ROM (Read Only Memory) 11b and a RAM (Random Access Memory) I I c, and a storage section 11d such as an HDD (Hard Disc Drive), a SSD (Solid State Device) and an SD (Secure Digital) Card. The CPU 11a develops various kinds of programs, currently stored in ROM 11b and/or the storage section 11d, into the RAM 11c, and executes the programs developed on RAM 11c, so as to conduct the overall operations to be implemented in the handwriting input apparatus 10a. The ROM 11b stores programs to be executed by the CPU 11a and other data, therein. The RAM 11c stores results of arithmetic calculation processing performed by the CPU 11a, etc., therein. In addition, the RAM 11c also serves as an input buffer storage that stores handwriting information, inputted on the touch panel 14a by handwriting operations performed by a user, therein. The storage section 11d stores various data such as programs to be executed by the CPU 11a and electronic data (display data) including handwriting information, therein.

The control section 11 is configured to allow a user to choose any one of the following modes by using a switch such as a hardware switch and a software switch displayed on the touch panel 14, as a modification mode to be used at the time when a strikethrough 31 is inputted onto handwriting information which has already been inputted: a mode to erase a part of the handwriting information, residing in an input region of the strikethrough 31 (that is, a mode to delete the strikethrough 31 itself together with a part of the handwriting information which has already been inputted, corresponding to the strikethrough 31), and a mode to add the strikethrough 31 to the handwriting information without deleting the part of the handwriting information, residing in an input region of the strikethrough 31 (that is, a mode not to delete the strikethrough 31). The control section 11 is further configured to, in response to receiving a notification indicating that an operation for inputting a strikethrough 31 onto the handwriting information has been performed on the touch panel 14a, from the touch panel control section 13a, edit display data according to the modification mode chosen by the user. The control section 11 is further configured to, in response to receiving a notification indicating that the operation for inputting a erasing lines 32 onto the handwriting information has been performed on the touch panel 14a, from the touch panel control section 13a, edit the display data so as to erase a part of the handwriting information, residing in an input region of the erasing lines 32, from the display data (to delete the erasing line 32 itself together with a part of the handwriting information which has already been inputted, corresponding to the erasing line 32). The control section 11 is further configured to display the edited handwriting information onto the touch panel 14a based on the display data above-edited, and/or store the edited display data into a storage such as the storage section 11d and the data storage server 20.

The communication interface section 12 serves as any one of a NIC (Network Interface Card), a modem or the like, which makes it possible to bilaterally communicate with the data storage server 20, etc., in either a wireless or a wired communication mode, which complies with one of communication standards, including the Ethernet (Registered Trade Mark), the NFC (Near Field Communication), the Bluetooth (Registered Trade Mark), the TransferJet (Registered Trade Mark), IEEE 802.11, etc.

The touch panel control section 13a is configured to perform the following processing. Based on signals outputted from the touch panel 14a, the touch panel control section 13a detects an action performed on the touch panel 14a (detects coordinate positions on the touch panel 14a), and determines whether the detected action is categorized in either an input action about handwriting information or an action to modify the handwriting information. Concretely speaking, the touch panel control section 13a defines the input region of the concerned action based on the signals outputted from the touch panel 14a. The touch panel control section 13a determines that an input action has been performed by using the stylus pen 30 when the width of the input region is equal to or smaller than a predetermined threshold value, while determines that an input action has been performed by using a user's finger or hand when the width of the input region exceeds the predetermined threshold value. Further, when determining that an input action has been performed by using the stylus pen 30 under the condition that the eraser function is turned on, the touch panel control section 13a determines that an operation to input an erasing line 32 is performed. Still further, when determining that an input action is performed by using the stylus pen 30 under the condition that the eraser function is not turned on, the touch panel control section 13a further determines whether the area of the input region is within a predetermined area or not and whether the inputted pattern coincides with a predetermined pattern or not. When determining that the area of the input region is within the predetermined area and the inputted pattern coincides with the predetermined pattern, the touch panel control section 13a determines that the concerned action is an action to input a strikethrough 31, while, when determining that the area of the input region exceeds the predetermined area, or the inputted pattern does not coincide with the predetermined pattern, the touch panel control section 13a determines that the concerned action is a normal action to input handwriting information. Then, the touch panel control section 13a notifies of the determination result above-determined to the control section 11.

For instance, the touch panel 14a serves as a digital resistance-film system touch panel or a capacitance sensitive touch panel, in each of which plural electrodes are arranged in a lattice pattern and which is mounted over an LCD (Liquid Crystal Display). In other words, the touch panel 14a serves as a device including both a display section 141a and an operating section 141b. The display section 141a is configured to display thereon handwriting information inputted on the touch panel 14a, based on the display data. The touch panel 14a is configured to detect a depressing pressure, a contact resistance and an electric charge, generated by the stylus pen 30 or the user's finger, to display a moving locus of the detected touch position, thereon, and to notify of the detected touch position and the detected touching pressure to the touch panel control section 13a. In this connection, the scope of the touch panel 14a is not limited to the digital resistance-film system touch panel or a capacitance sensitive touch panel. Another touch panel using any one of various kinds of method, including an infrared photo-imaging method, a ultrasonic method, an infrared/ultrasonic detecting method, an electro-magnetic induction method, etc., may be employed for this purpose.

In this connection, the block diagram shown in FIG. 2 indicates merely one of various configurations of the handwriting input apparatus 10a in accordance with the present embodiment, and the disclosed configuration may be varied by a skilled person as needed without departing from the spirit and scope of the invention. For instance, although the handwriting input apparatus 10a is provided with the touch panel control section 13a in the present embodiment, it is also applicable to make the control section 11 also serve as the touch panel control section 13a, so as to perform the processing to be conducted by the touch panel control section 13a, by making the control section 11 execute a program (operation control program executable by the control section 11).

The processing to be conducted by the handwriting input apparatus 10a above-configured will be detailed in the following. The CPU 11a develops the control program, stored in the ROM 11b or the storage section 11d, into the RAM 11c, and then, executes the developed control program so as to implement the processing indicated in the flowchart shown in FIG. 3.

### <OVERALL PROCESSING>

Initially, the handwriting input apparatus 10a is put in advance into a state that the modification mode to be used at the time a strikethrough 31 is inputted is set at either the modification mode to erase a strikethrough 31 or the other modification mode not to erase a strikethrough 31. For example, the control section 11 of the handwriting input apparatus 10a allows a user to choose the modification mode from among the modification mode to erase (delete) a strikethrough 31 or the other mode not to erase (delete) a strikethrough 31, by using a switch such as a hardware switch and a software switch displayed on the touch panel 14a, and receives an input of the modification mode chosen by the user (Step S100).

Next, based on signals outputted from the touch panel 14a, the touch panel control section 13a of the handwriting input apparatus 10a obtains information inputted through the touch panel 14a (input information) during a certain constant time-interval (Step S101), and determines whether or not the width of the input region of the input information is equal to or smaller than a predetermined threshold value established in advance (Step S102). When determining that the width of the input region of the input information exceeds the predetermined threshold value (Step S102; NO), the touch panel control section 13a determines that a finger or the like erroneously touched the touch panel 14a, and finalizes the processing.

When determining that the width of the input region of the input information is equal to or smaller than the predetermined threshold value established in advance (Step S102; YES), the touch panel control section 13a determines that the input information is inputted by using the stylus pen 30, and further determines whether or not the input information is information inputted to be applied to another information (handwriting information) which has already been inputted. First of the determining step, the touch panel control section 13a determines whether the eraser function has been turned on or not (Step S103). When determining that the eraser function has not been turned on (Step S103; NO), the touch panel control section 13a still further determines whether or not the input information is a strikethrough pattern to be put on another handwriting information which has already been inputted (Step S104).

When determining that the input information is not a strikethrough pattern (Step S104; NO), the control section 11 stores the input information into the storage section 11d as display data (Step S105). On the other hand, when determining that the input information is a strikethrough pattern (Step S104; YES), the control section 11 confirms the current modification mode (Step S106), and determines whether the current modification mode is set at the modification mode not to erase a strikethrough or not (Step S107).

When determining that the current modification mode is set at the modification mode not to erase a strikethrough (Step S107; YES), since the strikethrough 31 is to be handled in the same manner as the normal handwriting information is, the control section 11 stores the input information into the storage section 11d as a display data so that the input information as the strikethrough 31 can be displayed on the touch panel 14a (display section 141a) later with being added to another hardwiring information which has already been inputted (Step S105). On the other hand, when determining that the current modification mode is set at the other modification mode to erase a strikethrough (Step S107; NO), the control section 11 sets a rectangle flag (Step S108), and stores information to be erased (a part of the handwriting information residing within a rectangular region defined by the strikethrough pattern) into the storage section 11d (StepS 109).

Further, when determining that the eraser function has been turned on (Step S103; YES), the control section 11 sets a locus flag (Step S110), and stores information to be erased (a part of the handwriting information overlapping with the moving locus of the stylus pen 30) into the storage section 11d (Step S108).

Successively, after storing the display data in Step S105, or after storing the information to be erased in Step S109, the control section 11 determines whether either the rectangle flag or the locus flag is set or not (Step S111). When determining that either the rectangle flag or the locus flag is set (Step S111; YES), the control section 11 edits the display data based on the information to be erased (namely, deleting a part of the handwriting information residing within a rectangular region defined by the strikethrough pattern or deleting a part of the handwriting information overlapping with the moving locus of the stylus pen 30, together with the strikethrough pattern or the moving locus of the stylus pen 30) (Step S112), and display the modified handwriting information onto the touch panel 14a, based on the display data (Step S113).

### < PROCESSING OF DETERMINING STRIKETHROUGH >

Next, the processing of determining a strikethrough will be detailed in the following. The CPU 11a develops the control program, stored in the ROM 11b or the storage section 11d, into the RAM 11c, and then, executes the developed control program so as to perform the processing indicated in the flowchart shown in FIG. 4 (processing to be conducted in Step S104, shown in FIG. 3).

Initially, based on signals outputted from the touch panel 14a, the touch panel control section 13a defines the input region inputted with the stylus pen 30 (region in the vicinity of the input information) (Step S201), and determines whether or not another handwriting information which has already been inputted exists within the input region (whether or not another handwriting information is stored in the ROM 11b) (Step S202). When determining that another handwriting information does not exist within the input region (Step S202; NO), since the current input information can be considered as handwriting information newly inputted by using the stylus pen 30, the touch panel control section 13a finalizes the processing of determining a strikethrough.

On the other hand, when determining that another handwriting information which has already been inputted exists within the input region (Step S202; YES), the touch panel control section 13a defines the input area of the input region (when a line is inputted, the area of a region containing the line and the vicinity) (Step S203), and determines whether the input area is within a predetermined area or not (Step S204). Then, when determining that the input area is within the predetermined area (Step S204; YES), the touch panel control section 13a sets a predetermined area flag (Step S205). In this connection, the reason why determining whether the input area is within a predetermined area or not lies in such the considerations that, in almost cases where handwriting information is to be modified, a character, a word or a short segment may become a modification object, while, in a case where a relatively long segment or sentence is to be modified, these sentence or the segment is liable to be re-inputted into another position. Accordingly, by using the largeness of the input area, it becomes possible to appropriately determine whether or not the strikethrough 31 is inputted. Therefore, the predetermined area can be set at a value equivalent to an area to be occupied by a character, a word or a short segment.

Successively, the touch panel control section 13a defines an input pattern inputted by the stylus pen 30 (Step S206) and determines whether the input pattern coincides with a predetermined pattern or not (Step S207). When determining that the input pattern coincides with the predetermined pattern, the touch panel control section 13a sets a predetermined pattern flag (Step S208). In this connection, the reason why it is determined whether or not the input pattern coincides with a predetermined pattern lies in the fact that, for instance, since, sometimes, there occurs such a case that a figure, such as a wiggle line, a star mark, etc., is inputted, it is necessary not to erroneously recognize such the input information of the above-mentioned figure as a strikethrough 31.

Still successively, the touch panel control section 13a determines whether next input information exists or not (Step S209), and when determining that the next input information exists (Step S209; YES), returns to Step S203 in order to repeat the same processing as aforementioned. On the other hand, when determining that the next input information does not exist (Step S209; NO), the touch panel control section 13a sets strikethrough information (indicating whether or not the concerned information is strikethrough information) (Step S210), and finalizes the processing of determining a strikethrough.

Further, when determining that the input area is not within the predetermined area in Step S204, the touch panel control section 13a determines whether the predetermined area flag is set or not (Step S211), and when determining that the predetermined area flag is not set (Step S211, NO), finalizes the processing of determining a strikethrough. Still further, when determining in Step S207 that the input pattern does not coincide with the predetermined pattern, the touch panel control section 13a determines whether the predetermined pattern flag is set or not (Step S212), and when determining that the predetermined pattern flag is not set (Step S212; NO), finalizes the processing of determining a strikethrough. On the other hand, when determining that the predetermined area flag is set and the predetermined pattern flag is set (Step S212; YES), the touch panel control section 13a sets strikethrough information (Step S210), and finalizes the processing of determining a strikethrough.

According to the processing of determining a strikethrough above-mentioned, in the Step S104 shown in FIG. 3, when determining that the strikethrough information is set, the touch panel control section 13a determines that the received input information is a strikethrough, and shifts to Step S106, while, when determining that the strikethrough information is not set, determines that the received input information is normal handwriting information, and shifts to Step S105.

Referring to the concrete examples cited as follows, the control operations aforementioned will be detailed in the following.

FIG. 5A and FIG. 5B are schematic diagrams illustrating a relationship between handwriting information and electronic data (display data) in a case where no modification is applied to the handwriting information. As illustrated in FIG. 5A, when a user inputs handwriting information onto the touch panel 14a by using the stylus pen 30 or the like, the touch panel 14a converts the moving locus of the touched position of the stylus pen 30 into the electronic data as it is, and displays an image, represented by the electronic data, thereon (on the display section 141a of the touch panel 14a), as illustrated in FIG. 5B.

FIGs. 6A through 6D are schematic diagrams illustrating a relationship between handwriting information and electronic data (display data) in a case where a modification is applied to the handwriting information by using a strikethrough 31. When a user inputs handwriting information onto the touch panel 14a by using the stylus pen 30 or the like as illustrated in FIG. 6A, and then, the user inputs a strikethrough 31 in such a manner that the strikethrough 31 overlaps with a part of the handwriting information as illustrated in FIG. 6B, the handwriting input apparatus 10a detects an input action performed on the touch panel 14a to determine that the input information is a strikethrough 31 according to Step S104 illustrated in FIG. 3 (flowchart illustrated in FIG. 4), and confirms the currently-established modification mode in Step S106 illustrated in FIG. 3. In a case where the currently-established modification mode is set at the modification mode not to erase a strikethrough (Step S107; YES, illustrated in FIG. 3), the handwriting input apparatus 10a stores the strikethrough 31 as the display data, therein, (Step S105, illustrated in FIG. 3), and displays the modified handwriting information with the strikethrough 31 added (put) thereto, as shown in FIG. 6C. On the other hand, in a case where the currently-established modification mode is set at the other modification mode not to erase a strikethrough (Step S107; NO, shown in FIG. 3), the handwriting input apparatus 10a stores the part of the handwriting information within the rectangular region defined by the strikethrough 31 as information to be erased, therein, (Step S109, shown in FIG. 3), and then, edits the display data based on the information to be erased, so as to display the modified handwriting information in which the part of the handwriting information, designated by the strikethrough 31, is deleted together with the strikethrough 31 itself therefrom, as shown in FIG. 6D.

In this connection, although the double line is used as a strikethrough 31 in the schematic diagrams illustrated in FIGs. 6B and 6C, any kinds of figures and symbols, such as one or more lines overlapping with the handwriting information and a figure designating a certain region of the handwriting information, may be usable as a strikethrough 31, as far as the figure or symbol concerned is recognizable for the touch panel control section 13a as the modification designation for modifying the handwriting information (in other words, the concerned figure or symbol is distinguishable from another figure for stressing the handwriting information, etc.). For instance, a single line may be used as a strikethrough 31, as illustrated in FIG. 7A. Otherwise, a triple line may be also used, and a vertical line (herein, a vertical single line) may be also used as illustrated in FIG. 7B. Further, in order to make the strikethrough 31 easily distinguishable from a underline, a kind of line (herein, a diagonally inclined double line), which is diagonally inclined with respect to the reference direction of the handwriting information as illustrated in FIG. 7C, may be used as a strikethrough 31, otherwise, as illustrated in FIG. 7D, crossing lines (herein, a cross mark) may be also used. Still further, in order to make the erasing portion of the handwriting information easily recognizable, a rectangular figure may be used to designate the erasing portion as shown in FIG. 7E, otherwise, a circular figure or an elliptic figure may be also used, as shown in FIG. 7F.

FIGs. 8A through 8C are schematic diagrams illustrating a relationship between handwriting information and electronic data (display data) in a case where a modification is applied to the handwriting information by using an erasing line 32. When a user inputs handwriting information onto the touch panel 14a by using the stylus pen 30 or the like as illustrated in FIG. 8A, and then, the user inputs an erasing line 32 by shuttling the stylus pen 30 over the handwriting information or by moving the stylus pen 30 so as to trace the handwriting information, in such a manner that the moving locus of the stylus pen 30 overlaps a part of the handwriting information as shown in FIG. 8B, the handwriting input apparatus 10a detects the input operation of the user performed on the touch panel 14a and stores, based on the detected input operation, the part of the handwriting information, which is overlapping with the locus of the erasing line 32, as information to be erased, therein (Step S109, illustrated in FIG. 3), and then, modifies the display data based on the information to be erased, so as to display the modified handwriting information in which the part of the handwriting information, designated by the erasing line 32, is erased together with the erasing line 32 itself therefrom, as illustrated in FIG. 8C.

As described in the foregoing, the handwriting input apparatus 10a, in accordance with the present embodiment, has a structure configured to perform the following processing. The handwriting input apparatus 10a allows a user to choose a modification mode to be used when a user inputs a strikethrough 31 from among a mode in which a part of handwriting information within the input region of the strikethrough 31 is erased together with the strikethrough 31 (the mode to delete a strikethrough 31) and a mode in which the strikethrough 31 is added (put) to the handwriting information without the part of the handwriting information being erased (the mode not to delete a strikethrough 31). Further, when receiving an input operation of a strikethrough 31, the handwriting input apparatus 10a modifies the handwriting information according to the mode chosen by the user. Thereby, the handwriting input apparatus 10a can display and/or store the handwriting information modified in accordance with the user's intention.

Concretely, the touch panel control section 13a of the handwriting input apparatus 10a determines that a strikethrough pattern (a first pattern) has been inputted, in response to detecting an input action on the touch panel 14a, which is an input action that a user inputs, with a stylus pen 30, one or more lines overlapping with handwriting information which has already inputted or an input action that a user inputs, with the stylus pen 30, a figure designating a certain region of the handwriting information which has already been inputted. In response to the determining result that the strikethrough pattern (the first pattern) has been inputted under the condition that the mode to delete a part of the handwriting information within the input region of the strikethrough 31 (the mode to delete a strikethrough 31), the control section 11 deletes a part of the handwriting information within a rectangular region containing the one or more lines or within the region designated by the figure, together with the one of the one or more lines and the figure, from the display data

Further, when detecting an action on the touch panel 14a, which is an action that a user shuttles the stylus pen 30 on the handwriting information which has already been inputted or an action that a user traces, with the stylus pen 30, the handwriting information which has already been inputted, the touch panel control section 13a determines that an erasing line 32 (a second pattern) has been inputted. In response to the determining result that the erasing line 32 (the second pattern) has been inputted, the control section 11 deletes a part of the handwriting information overlapped with the locus of the stylus pen 30 in the shuttling action or the tracing action, together with the locus of the stylus pen 30 in the shuttling action or the tracing action, from the display data.

### EMBODIMENT 2:

Under the condition that a user is conducting handwriting with a pen, a pencil or the like on a sheet of paper put on a touch panel of the handwriting input apparatus with no display function, as described in the descriptions about the background, the modification of the handwriting information written on a sheet of paper, conducted by a user by using an eraser or a strikethrough, sometimes brings a unwanted result that the handwriting input apparatus does not store the modified handwriting information as the user intended.

For instance, in a case where a user modifies handwriting information written on a sheet by using an eraser, the original handwriting information around the modified part on the sheet disappears, and then, another handwriting information is newly written there. From the viewpoint of handling the modified information as electric data, it is desirable that the handwriting input apparatus stores the handwriting information on the sheet of paper as electronic data with its appearance on the sheet being kept. On the other hand, in a case where the user modifies handwriting information on the sheet by using a strikethrough, the handwriting input apparatus may store the concerned handwriting information on the sheet as electronic data with its appearance on the sheet being kept (namely, in such a state that the strikethrough is added onto the original handwriting information). However, when the user intends to use the after-modified handwriting information for forming a clean copy thereof, it is desirable that the handwriting input apparatus erases a part of the handwriting information on which the strikethrough has been written, and stores the modified handwriting information as electronic data. However, conventional handwriting input apparatuses are not configured to allow a user to choose whether the modified part of the handwriting information should be maintained or erased, which can causes a problem that the handwriting input apparatus sometimes do not store the modified handwriting information in the manner that the user intended.

To overcome the above-mentioned problem, the handwriting input apparatus provided with no display function, in accordance with the present embodiment, has a structure configured to perform the following processing. The handwriting input apparatus allows a user to choose a modification mode to be used when a user conducts a modification operation by using a strikethrough on the handwriting input apparatus, from a modification mode to store handwriting information while adding the strikethrough thereto and another modification mode to store handwriting information while deleting a part of the original handwriting information where the strikethrough is added. Then, the handwriting input apparatus determines whether or not an operation performed on the touch panel is one of a modification operation performed with an eraser and a modification operation performed by using a strikethrough, based on at least one of the width and the area of the input region, input time period, input pattern, which are detected by the touch panel. When the modification operation has been performed with an eraser, the handwriting input apparatus stores the handwriting information with the modified portion being erased therefrom. When receiving a modifying operation performed on handwriting information on the touch panel by using a strikethrough, the handwriting input apparatus stores the handwriting information modified according to the modification mode which has been chosen, that is, the handwriting input apparatus stores the handwriting information with the strikethrough being added thereto or the handwriting information with a part where the strikethrough is added being erased thereform together with the strikethrough itself.

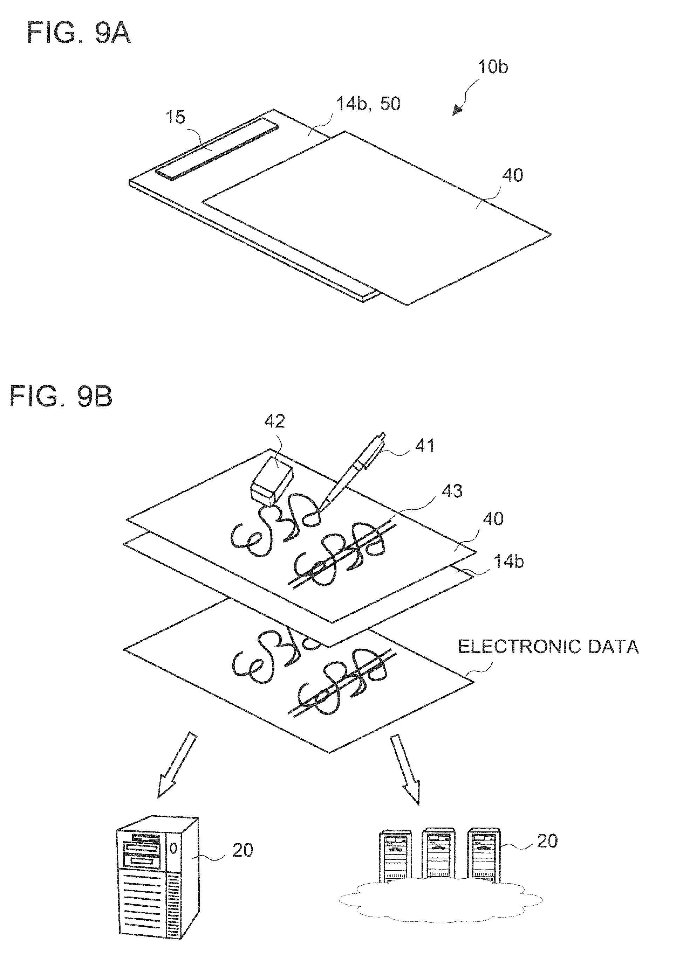

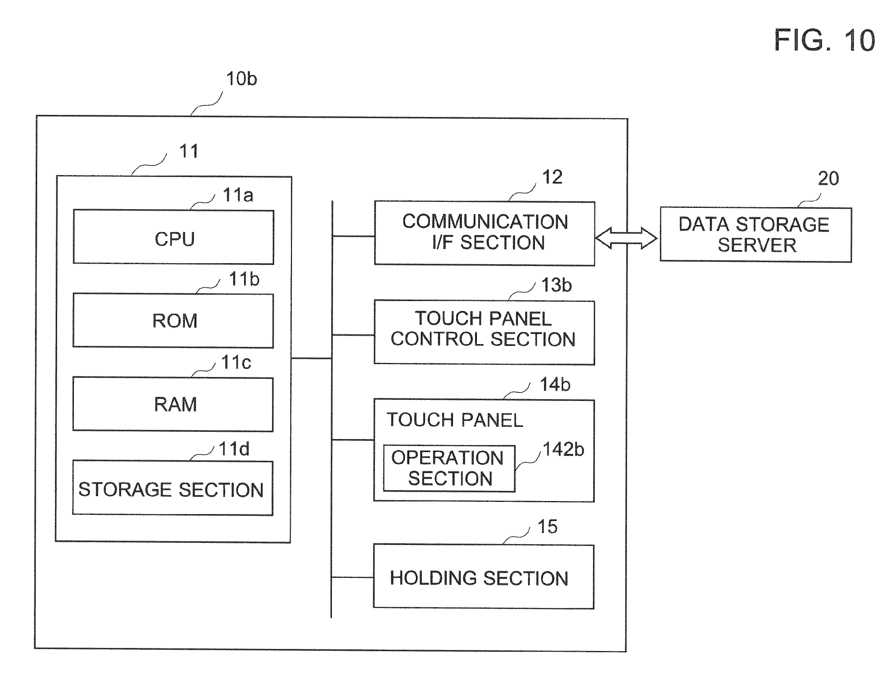

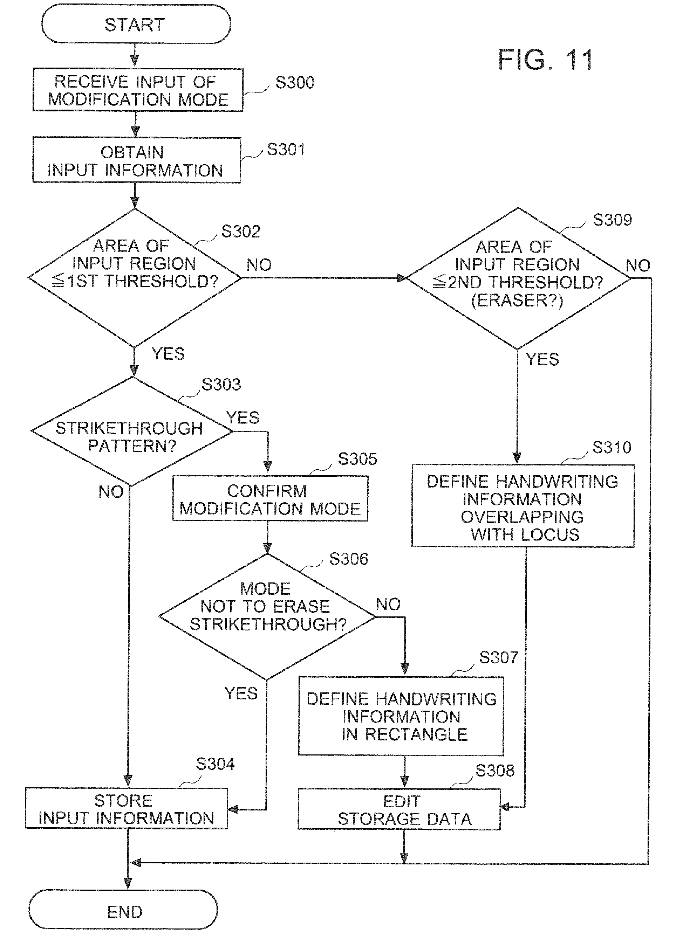

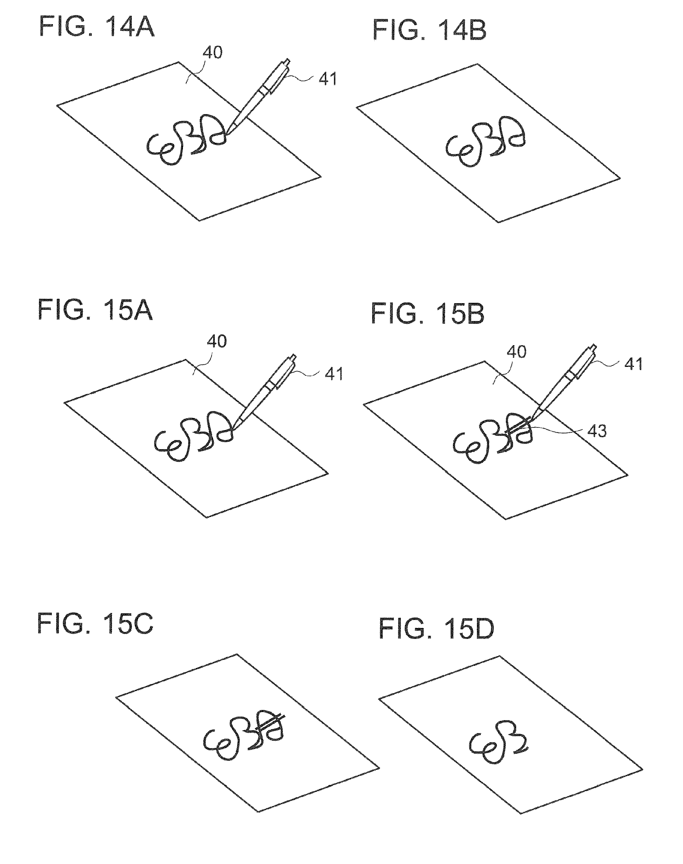

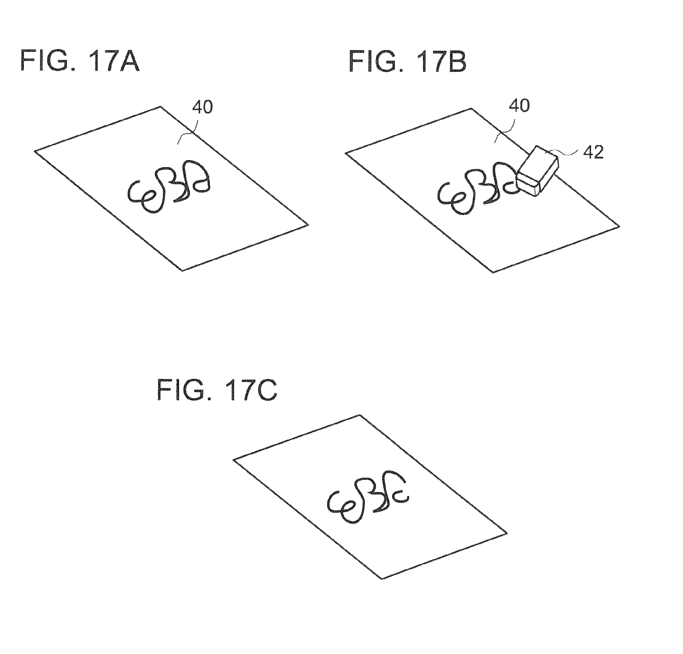

Referring to the drawings shown in FIG. 9A through FIG. 17C, a handwriting input apparatus in accordance with the present embodiment will be detailed in the following. FIG. 9A and FIG. 9B are schematic diagrams illustrating structural outer appearances of the handwriting input apparatus in accordance with the present embodiment, FIG. 10 is a block diagram illustrating a configuration of the handwriting input apparatus in accordance with the present embodiment, and FIG. 11, FIG. 12 and FIG. 13 are flowcharts illustrating flows of processing to be conducted in the handwriting input apparatus in accordance with the present embodiment. Further, FIG. 14A, FIG. 14B, FIGs. 15A through 15D and FIGs. 16A through 16F are schematic diagrams illustrating relationships between handwriting information and electronic data, while, FIGs. 17A through 17F, are schematic diagrams illustrating various kinds of strikethroughs.

As shown in FIG. 9A, a handwriting input apparatus 10b, in accordance with the present embodiment, is provided with a touch panel 14b, serving as a pressure sensitive-type touch panel, and a holding section 15 such as a clip, etc., where the touch panel 14b is formed on a base 50 on which one or more sheets of paper 40 can be put, and the holding section 15 is provided for holding the one or more sheets 40 on the touch panel 14b. Further, the handwriting input apparatus 10b has a structure configured to perform the following processing. As shown in FIG. 9B, when a user performs a handwriting input operation onto the one or more sheets of paper 40 placed on the touch panel 14b, by using any one of a pencil, a sharp pencil, a ballpoint pen, etc., (hereinafter, referred to as a pen 41 as the general term of them) to input handwriting information therefrom, the touch panel 14b detects a depressing pressure applied by the pen 41, and the handwriting input apparatus 10b outputs electronic data representing a moving locus of the position depressed by the pen 41 therefrom. Further, when a user erases the handwriting information by using an eraser 42 (or a correction pen having a bold pen tip to apply correcting fluid, for erasing handwriting information written by using a ballpoint pen), or writes a strikethrough 43 by using the pen 41, the handwriting input apparatus 10b edits the handwriting information according to the control method detailed later, to output the edited handwriting information to be the electronic data therefrom. Successively, the handwriting input apparatus 10b stores the electronic data concerned a storage such as an internal storage section thereof and a data storage server 20 installed in an external environment.

As shown in FIG. 10, the handwriting input apparatus 10b is constituted by a control section 11, a communication I/F (interface) section 12, a touch panel control section 13b, the touch panel 14b, and a holding section 15.

The control section 11 is constituted by a CPU (Central Processing Unit) 11a, various kinds of storage devices including a ROOM (Read Only Memory) 11b and a RAM (Random Access Memory) 11c, and a storage section 11d such as an HDD (Hard Disc Drive), a SSD (Solid State Device) and an SD (Secure Digital) Card. The CPU 11a develops various kinds of programs, currently stored in ROOM 11b and/or the storage section 11d, into the RAM 11c, and executes the programs developed on RAM 11c, so as to conduct the overall operations to be implemented in the handwriting input apparatus 10b. The ROM 11b stores the programs to be executed by the CPU 11a and other data, therein. The RAM 11c stores results of arithmetic calculation processing performed by the CPU 11a, etc., therein. In addition, the RAM 11c also serves as an input buffer storage that stores handwriting information, inputted by handwriting operations performed by a user onto the one or more sheets of paper 40 (coordinate values of the moving locus). The storage section 11d stores various data such as programs to be executed by the CPU 11a and electronic data (storage data) including handwriting information, therein.

The control section 11 is configured to allow a user to choose any one of the following modes by using a hardware switch, as a modification mode to be used at the time when a strikethrough 43 is inputted onto handwriting information which has already been written: a first mode to erase a part of the handwriting information, residing in an input region of the strikethrough 43, together with the strikethrough 43 itself, and a second mode to add the strikethrough 43 to the handwriting information without erasing the part of the handwriting information, residing in an input region of the strikethrough 43. The control section 11 is further configured to, in response to receiving a notification indicating that an operation for inputting a strikethrough 43 has been performed on the touch panel 14b, from the touch panel control section 13b, edit the storage data according to the modification mode chosen by the user. The control section 11 is further configured to, in response to receiving a notification indicating that an operation for erasing the handwriting information by using an eraser 42 has been performed on the touch panel 14b, from the touch panel control section 13b, edit the storage data so as to erase a part of the handwriting information, residing in an input region inputted by the eraser 42, from the storage data. The control section 11 is further configured to store the edited storage data into a storage such as the storage section 11d and the data storage server 20.

The communication interface section 12 serves as any one of a NIC (Network Interface Card), a modem or the like, which makes it possible to bilaterally communicate with the data storage server 20, etc., in either a wireless or a wired communication mode, which complies with one of communication standards, including the Ethernet (Registered Trade Mark), the NFC (Near Field Communication), the Bluetooth (Registered Trade Mark), the TransferJet (Registered Trade Mark), IEEE802.11, etc.

The touch panel control section 13b is configured to perform the following processing. Based on signals outputted from the touch panel 14b, the touch panel control section 13b detects an action performed on the sheet of paper (detects coordinate positions on the sheet), and determines whether the detected action is categorized in an input action about handwriting information, an operation for modifying the handwriting information by employing the pen 41, or an action to modify the handwriting information by employing the eraser 42. Concretely speaking, the touch panel control section 13b defines the input region of the concerned action based on the signals outputted from the touch panel 14b. Successively, when the width of the input region is equal to or smaller than a first threshold value determined in advance, the touch panel control section 13b determines that the input action has been performed by using the pen 41. Further, when determining that the input action has been performed by using the pen 41, the touch panel control section 13b further determines whether or not the input area is within a predetermined area and whether or not the inputted pattern coincides with a predetermined pattern. When determining that the input area is within the predetermined area and the inputted pattern coincides with the predetermined pattern, the touch panel control section 13b determines that the concerned action is an action to input a strikethrough 43, while, when determining that the input area exceeds the predetermined area, or the inputted pattern does not coincide with the predetermined pattern, determines that the concerned action is an normal action to input the handwriting information. Further, when the width of the input region exceeds the first threshold value, the touch panel control section 13b determines whether or not the width of the input region is equal to or smaller than a second threshold value established in advance, and then, when determining that the width of the input region is equal to or smaller than the second threshold value and the concerned action is such an action that a user shuttles an eraser on the sheet within a predetermined time interval, the touch panel control section 13b determines that the input action is performed by using the eraser 42, while, when determining that the width of the input region exceeds the second threshold value, the touch panel control section 13b determines that the input action is performed by using any one of a finger and a hand. Then, the touch panel control section 13b notifies of the determination result above-determined to the control section 11.

For instance, the touch panel 14b serves as a digital resistance-film system touch panel in which plural electrodes are arranged in a lattice pattern and which is mounted over a surface of a base 50 on which one or more sheets of paper are to be placed. Namely, the touch panel 14b serves as a device including just an operating section 142b. The touch panel 14b is configured to detect a depressing pressure applied by any one of the pen 41, the eraser 42, the user's finger, etc., and notify of the detected touched position and the detected touching pressure to the touch panel control section 13b. In this connection, the scope of the touch panel 14b is not limited to the digital resistance-film system touch panel. Another touch panel using any one of various kinds of methods, including an infrared photo-imaging method, a ultrasonic method, an infrared/ultrasonic detecting method, an electro-magnetic induction method, etc., may be employed for this purpose.

The holding section 15 is so constituted that an end portion thereof is fixed onto the casing of the handwriting input apparatus 10b in such a manner that the other end portion thereof is urged by an elastic body such as a spring so as to movably press the touch panel 14b.

In this connection, the block diagram shown in FIG. 10 indicates merely one of various configurations of the handwriting input apparatus 10b in accordance with the present embodiment, and the disclosed configuration may be varied by a skilled person as needed without departing from the spirit and scope of the invention. For instance, although the handwriting input apparatus 10b is provided with the touch panel control section 13b in the present embodiment, it is also applicable to make the control section 11 also serve as the touch panel control section 13b, so as to perform the processing to be conducted by the touch panel control section 13b, by making the control section 11 execute a program (operation control program executable by the control section 11).

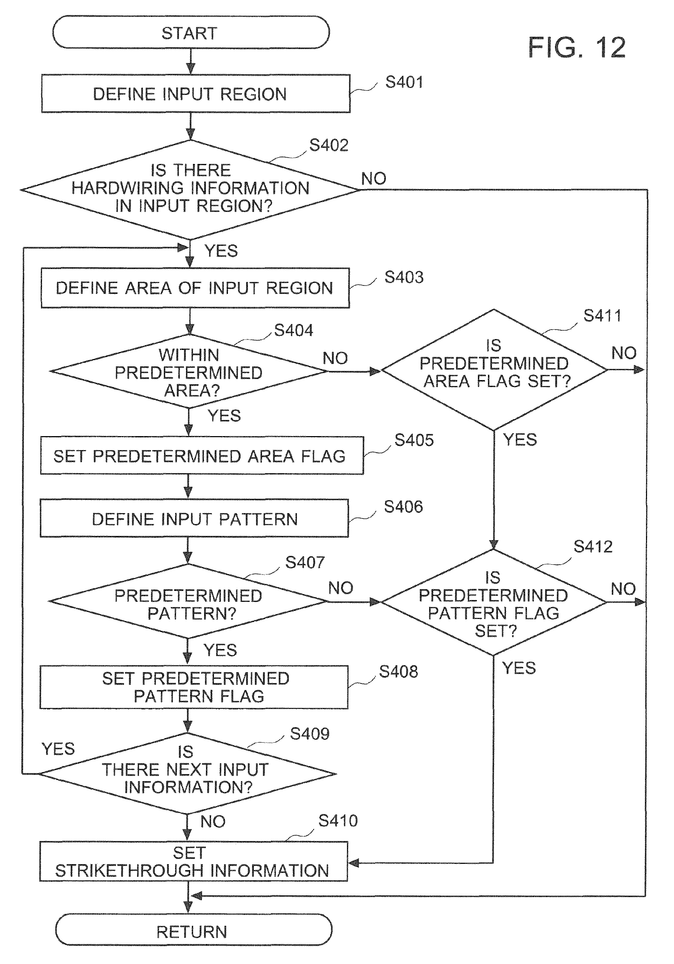

The processing to be conducted by the handwriting input apparatus 10b above-configured will be detailed in the following. The CPU 11a develops the control program, stored in the ROOM 11b or the storage section 11d, into the RAM 11c, and then, executes the developed control program so as to implement the processing indicated in the flowchart shown in FIG. 12.

### <OVERALL PROCESSING

Initially, the handwriting input apparatus 10b is put in advance into a state that the modification mode to be used at the time a strikethrough 43 is inputted is set at either the modification mode to erase a strikethrough 43 or the other modification mode not to erase a strikethrough 43. For example, the control section 11 of the handwriting input apparatus 10b allows a user to choose the modification mode from among the modification mode to erase a strikethrough 43 or the other mode not to erase a strikethrough 43, by using a switch such as a hardware switch, and receives an input of the modification mode chosen by the user (Step S300).

Next, based on signals outputted from the touch panel 14b, the touch panel control section 13b of the handwriting input apparatus 10b obtains information inputted through the touch panel 14b during a certain constant time-interval (Step S301), and determines whether or not the width of the input region of the input information is equal to or smaller than a first predetermined threshold value established in advance (Step S302). When determining that the width of the input region of the input information is equal to or smaller than the first predetermined threshold value (Step S302; YES), the touch panel control section 13b determines that the concerned input information is inputted by using the pen 41 and further determines whether or not the input information is information inputted to be applied onto another handwriting information which has already been inputted. First of the determining step, the touch panel control section 13b confirms whether or not the input information is a strikethrough pattern to be applied to another handwriting information which has already been inputted (Step S303).

When determining that the input information is not a strikethrough pattern (Step S303; NO), the control section 11 stores the input information into a storage such as the storage section 11d and the data storage server 20 installed in the external environment, as storage data (Step S304). On the other hand, when determining that the input information is a strikethrough pattern (Step S303; YES), the control section 11 confirms the current modification mode (Step S305), and determines whether the current modification mode is set at the modification mode not to erase a strikethrough or not (Step S306).

When determining that the current modification mode is set at the modification mode not to erase a strikethrough (Step S306; YES), since the strikethrough 43 is to be handled in the same manner as the normal handwriting information is, the control section 11 stores the input information into a storage such as the storage section 11d and the data storage server 20 installed in the external environment, as a storage data so that the input information can be added later to another handwriting information which has already been inputted (Step S304). On the other hand, when determining that the current modification mode is set at the modification mode to erase a strikethrough (Step S306; NO), the control section 11 defines a part of the handwriting information, residing within a rectangular region designated by the strikethrough 43 (Step S307), and then, conducts an editing operation to erase the defined part of the handwriting information together with the strikethrough 43 itself, from the storage data (Step S308).

Further, when determining in Step S302 that the width of the input region exceeds the first predetermined threshold value (Step S302; NO), the touch panel control section 13b further determines whether the width of the input region of the input information is equal to or smaller than a second threshold value or not (Step S309). When determining that the width of the input region of the input information exceeds the second threshold value (Step S309; NO), the touch panel control section 13b determines that a finger or the like erroneously touched the touch panel 14b, and finalizes the processing. When determining that the width of the input region of the input information is equal to or smaller than the second threshold value (Step S309; YES), the touch panel control section 13b determines that the concerned input operation is performed by using the eraser 42, the control section 11 defines a part of the handwriting information that overlaps with the moving locus of the eraser 42 (Step S310), and then, conducts an editing operation to erase the defined part of the handwriting information together with the moving locus of the eraser 42, from the storage data (Step S308).

### < PROCESSING OF DETERMINING STRIKETHROUGH >

Next, the determination processing of a strikethrough, which is to be implemented in Step S303, will be detailed in the following. The CPU 11a develops the control program, stored in the ROOM 11b or the storage section 11d, into the RAM 11c, and then, executes the developed control program so as to perform the processing indicated in the flowchart shown in FIG. 12.

Initially, based on signals outputted from the touch panel 14b, the touch panel control section 13b defines the input region inputted with the pen 41 (region in the vicinity of the input information) (Step S401), and determines whether or not another hardwiring information which has already been inputted exists within the input region (another input information is stored in the ROM 11b) (Step S402). When determining that another handwriting information does not exist within the input region (Step S402; NO), since the current input information can be considered as handwriting information newly inputted by using the pen 41, the touch panel control section 13b finalizes the processing of determining a strikethrough.

On the other hand, when determining that another handwriting information which has already been inputted exists within the input region (Step S402; YES), the touch panel control section 13b defines the input area of the input region (when a line is inputted, the area of a region containing the line and the vicinity) (Step S403), and determines whether the input area is within a predetermined area or not (Step S404). Then, when determining that the input area is within the predetermined area (Step S404; YES), the touch panel control section 13b sets a predetermined area flag (Step S405).

In this connection, the reason why determining whether or not the input area is within a predetermined area lies in the fact that, in almost cases where the handwriting information is to be modified, a character, a word or a short segment may become a modification object, while, in a case where a relatively long segment or sentence is to be modified, these sentence or the segment is liable to be re-inputted into another position. Accordingly, by using the largeness of the input area, it becomes possible to appropriately determine whether or not the strikethrough 43 is inputted. Therefore, the predetermined area can be set at a value equivalent to an area to be occupied by a character, a word or a short segment.

Successively, based on signals outputted by the touch panel 14b, the touch panel control section 13b defines an input pattern inputted by the pen 41 (Step S406) and determines whether the input pattern coincides with a predetermined pattern or not (Step S407). When determining that the input pattern coincides with the predetermined pattern, the touch panel control section 13b sets a predetermined pattern flag (Step S408). In this connection, the reason why it is determined whether or not the input pattern coincides with a predetermined pattern lies in the fact that, for instance, sometimes, there occurs such a case that a figure, such as a wiggle line, a star mark, etc., is inputted in order to stress the handwriting information, and accordingly, it is necessary not to erroneously recognize such the input information of the above-mentioned figure as a strikethrough 43.

Still successively, the touch panel control section 13b determines whether next input information exists or not (Step S409), and when determining that the next input information exists (Step S409; YES), returns to Step S403 in order to repeat the same processing as aforementioned. On the other hand, when determining that the next input information does not exist (Step S409; NO), the touch panel control section 13b sets strikethrough information (indicating whether or not the concerned information is strikethrough information) (Step S410), and finalizes the processing of determining a strikethrough.

Further, when determining that the input area is not within the predetermined area in Step S404, the touch panel control section 13b determines whether or not the predetermined area flag is set (Step S411), and when determining that the predetermined area flag is not set (Step S411; NO), finalizes the processing of determining a strikethrough. Still further, when determining that the input pattern does not coincide with the predetermined pattern in Step S407, the touch panel control section 13b determines whether the predetermined pattern flag is set or not (Step S412), and when determining that the predetermined pattern flag is not set (Step S412; NO), finalizes the determination processing of the cancellation line. On the other hand, when determining that the predetermined area flag is set and the predetermined pattern flag is set (Step S412; YES), the touch panel control section 13b sets strikethrough information (Step S410), and finalizes the processing of determining a strikethrough.

According to the processing of determining a strikethrough above-mentioned, in the Step S303 shown in FIG. 11, when determining that the strikethrough information is set, the touch panel control section 13b determines that the strikethrough is inputted, and shifts to Step S305, while, when determining that the strikethrough information is not set, determines that the normal handwriting information is inputted, and shifts to Step S304.

### < PROCESSING OF DETERMINING ERASER >

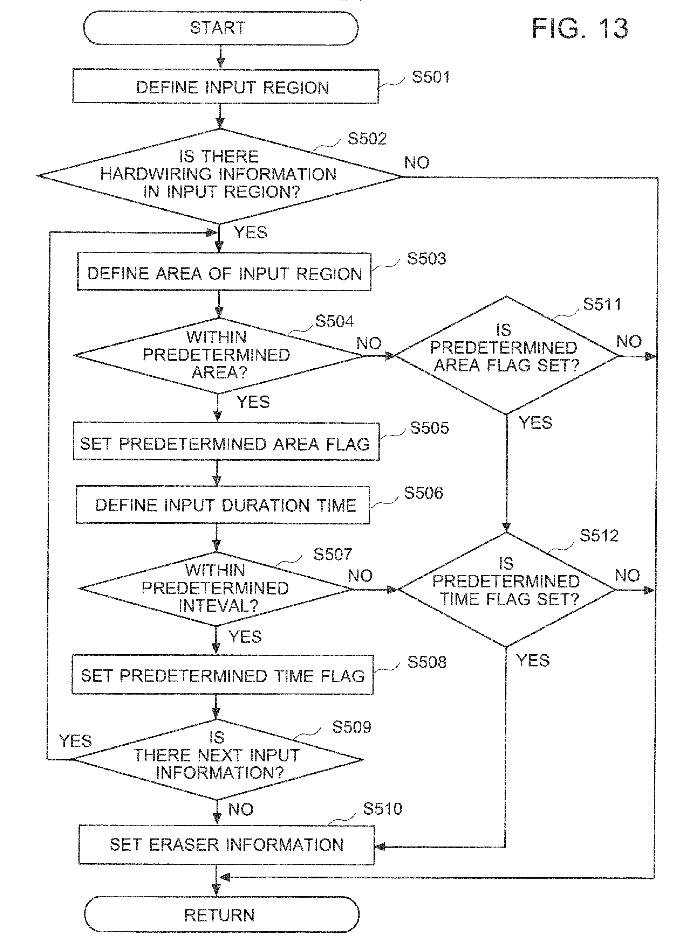

Next, the processing for determining whether or not a modifying action is based on the eraser 42 will be detailed in the following. The CPU 11a develops the control program, stored in the ROM 11b or the storage section 11d, into the RAM 11c, and then, executes the developed control program so as to perform the processing indicated in the flowchart shown in FIG. 13 (processing to be conducted in Step S309, shown in FIG. 11).

Initially, based on signals outputted from the touch panel 14b, the touch panel control section 13b defines the input region (region around the input information) (Step S501), and determines whether or not another handwriting information which has already been inputted exists within the input region (whether or not another handwriting information is stored in the ROOM 11b) (Step S502). When determining that another handwriting information does not exist within the input region (Step S502; NO), since it is unnecessary to modify any handwriting information, the touch panel control section 13b finalizes the determination processing of the eraser.

On the other hand, when determining that another handwriting information which has already been inputted exists within the input region (Step S502; YES), the touch panel control section 13b defines the input area of the input region (Step S503), and determines whether the input area is within a predetermined area or not (Step S504). Then, when determining that the input area is within the predetermined area (Step S504; YES), the touch panel control section 13b sets a predetermined area flag (Step S505). In this connection, the reason why determining whether the input area is within a predetermined area or not lies in the fact that, since the input area in the case where a finger, a hand or the like touches the touch panel 14b becomes relatively large, compared to that in the case where the eraser 42 touches the touch panel 14b, it becomes possible to appropriately determine whether or not the input operation is performed by using the eraser 42, by using the largeness of the input area. Therefore, the predetermined area can be set at a value being slightly smaller than the input area in the case where a finger, a hand or the like touches the touch panel 14b.

Successively, based on signals outputted by the touch panel 14b, the touch panel control section 13b defines an input duration time of the input information (Step S506) and determines whether the input duration time is within a predetermined time interval or not (Step S507). When determining that the input duration time is within a predetermined time interval, the control section 11 sets a predetermined time flag (Step S508). In this connection, the reason why it is determined whether or not the input duration time is within the predetermined time interval lies in the fact that, for instance, since, sometimes, there occurs such a case that, in order to make it easy to fix one or more sheets of paper 40 onto the touch panel 14b and/or to perform a handwriting input operation, the user continues to depress the touch panel 14b with his finger for a while, or the similar case, it is necessary not to erroneously recognize the above-mentioned case as the erasing operation performed by using the eraser 42.

Still successively, the touch panel control section 13b determines whether next input information exists or not (Step S509), and when determining that the next inputted information exists (Step S509; YES), returns to Step S503 in order to repeat the same processing as aforementioned. On the other hand, when determining that the next inputted information does not exist (Step S509; NO), the touch panel control section 13b sets eraser information (indicating whether or not the concerned input action is the erasing operation performed by using the eraser 42) (Step S510), and finalizes the processing of determining a strikethrough.

Further, when determining that the input area is not within the predetermined area in Step S504, the touch panel control section 13b determines whether the predetermined area flag is set or not (Step S511), and when determining that the predetermined area flag is not set (Step S511; NO), finalizes the processing of determining the eraser. Still further, when determining in Step S507 that the input duration time is not within a predetermined time interval, the touch panel control section 13b of the control section 11 determines whether the predetermined time flag is set or not (Step S512), and when determining that the predetermined time flag is not set, finalizes the processing of determining the eraser. On the other hand, when determining that the predetermined area flag is set and the predetermined time flag is set, the touch panel control section 13b sets the eraser information (Step S510), and finalizes the processing of determining the eraser.

According to the processing of determining the eraser above-mentioned, in the Step S309 shown in FIG. 11, when determining that the eraser information is set, the touch panel control section 13b determines that the concerned input action is the erasing action performed by using the eraser 42, and shifts to Step S310, while, when determining that the eraser information is not set, determines that the normal handwriting information is inputted by using the finger or the hand, and finalizes the processing.

Referring to the concrete examples cited as follows, the control operations aforementioned will be detailed in the following.

FIG. 14A and FIG. 14B are schematic diagrams illustrating a relationship between the handwriting information and the electronic data (storage data) in a case where no modification is applied to the handwriting information. As illustrated in FIG. 14A, when a user inputs handwriting information onto a sheet of paper 40 by using the pen 41 or the like, the touch panel 14b converts the moving locus of the touched position of the pen 41 detected by touch panel 14b into electronic data as it is, and stores the electronic data into the storage section 11d and/or the data storage server 20.

FIGs. 15A through 15D are schematic diagrams illustrating a relationship between handwriting information and electronic data (storage data) in a case where a modification is applied to the handwriting information by using a strikethrough 43. After a user has inputted handwriting information onto the touch panel 14b by using the pen 41 or the like as shown in FIG. 15A, when the user inputs a strikethrough 43 in such a manner that the strikethrough 43 overlaps with a part of the handwriting information as illustrated in FIG. 15B, the handwriting input apparatus 10b detects an input action performed on the touch panel 14a to determine the input information as the strikethrough 43 according to Step S303 shown in FIG. 11 (flowchart illustrated in FIG. 12), and confirms the currently-established modification mode in Step S305 shown in FIG. 11. In a case where the currently-established modification mode is set at the modification mode not to erase a strikethrough (Step S306; YES, illustrated in FIG. 11), the handwriting input apparatus 10a stores the strikethrough 43 as a part of handwriting information, therein, (Step S304, illustrated in FIG. 11), namely, stores electronic data representing an image in which the strikethrough 43 is added to the handwriting information, therein, as shown in FIG. 15C. On the other hand, in a case where the currently-established modification mode is set at the other modification mode to erase a strikethrough (Step S306; NO, shown in FIG. 11), the handwriting input apparatus 10a defines a part of handwriting information residing within rectangular region defined by the strikethrough 43 (Step S307, shown in FIG. 11), and then, edits the electronic data so as to erase the above-defined part of handwriting information (Step S308, shown in FIG. 11), and successively, stores the modified handwriting information in which the part of the handwriting information, designated by the strikethrough 43 is deleted together with the strikethrough 43 itself, as the electronic data, as illustrated in FIG. 15D.

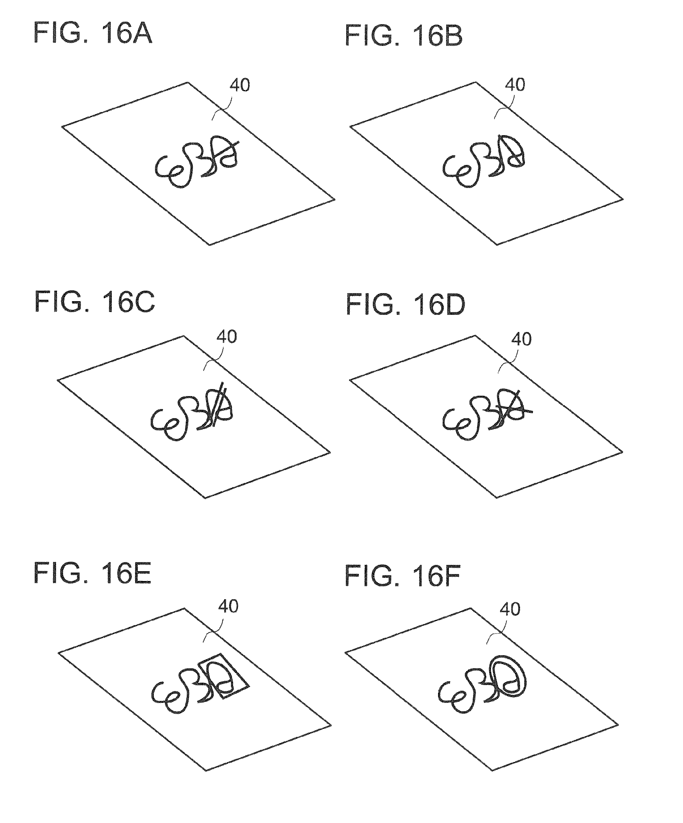

In this connection, although a double line is used as a strikethrough 43 in the schematic diagrams illustrated in FIGs. 15B and 15C, as well as Embodiment 1, any kinds of figures and symbols, such as one or more lines overlapping with the handwriting information and figures designating a certain region of the handwriting information, may be usable as the strikethrough 43, as far as the figure or symbol concerned is recognizable for the user as the modification designation for modifying the handwriting information (in other words, the concerned figure or symbol is distinguishable from another figure for stressing the handwriting information, etc.). For instance, as shown in FIG. 16A, a single line may be used as the strikethrough 43, otherwise, a triple line may be also used, and as shown in FIG. 16B, a vertical line (herein, a vertical single line) may be also used. Further, in order to make the strikethrough 43 easily distinguishable from a underline, a kind of line (herein, a diagonally inclined double line), which is diagonally inclined with respect to the reference direction of the handwriting information as shown in FIG. 16C, may be used as a strikethrough 43, otherwise, as shown in FIG. 6D, crossing lines (herein, a cross mark) may be also used as well. Still further, in order to make the erasing portion of the handwriting information easily recognizable, a rectangular figure may be used to designate the erasing portion as shown in FIG. 16E, otherwise, a circular figure or an elliptic figure may be also used as well, as shown in FIG 16F.

FIGs. 17A through 17C are schematic diagrams illustrating a relationship between handwriting information and electronic data (storage data) in a case where a modification is applied to the handwriting information by using the eraser 42. After a user has inputted handwriting information onto the touch panel 14b by using the pen 41 or the like as shown in FIG. 17A, when the user erases a part of the handwriting information by shuttling the eraser 42 over the handwriting information or by moving the eraser 42 so as to trace the handwriting information, the handwriting input apparatus 10b detects the movement of the eraser 42 on the sheet 40 and defines, based on the detected movement, the part of the handwriting information overlapped with the moving locus of the eraser 42 (Step S310, shown in FIG. 11) and then, edits the electronic data so as to erase the defined part of the handwriting information (Step S308, shown in FIG. 11), and successively, stores the modified handwriting information in which the part of the handwriting information, designated by the moving locus of the eraser 42, is erased together with the moving locus of the eraser 42 itself therefrom, as electronic data, as illustrated in FIG. 15D.

As described in the foregoing, the handwriting input apparatus 10b, in accordance with the present embodiment, has a structure configured to perform the following processing. The handwriting input apparatus 10b allows a user to choose a modification mode to be used when a user inputs a strikethrough 43 from among a mode in which a part of handwriting information within the input region of the strikethrough 43 is erased together with the strikethrough 43 (the mode to delete a strikethrough 43) and a mode in which the strikethrough 43 is added (put) to the handwriting information without the part of the handwriting information being erased (the mode not to erase a strikethrough 43). Further, when receiving an input operation of a strikethrough 43, the handwriting input apparatus 10b modifies the handwriting information according to the mode chosen by the user. Thereby, the handwriting input apparatus 10b can store the handwriting information modified in accordance with the user's intention. Further, comparing the width of the input region with the predetermined threshold value and determining whether at least one of the input area and the input duration is within the predetermined value, the handwriting input apparatus 10b can appropriately acknowledge an erasing operation by using the eraser 42 to modify the handwriting information. Thereby, the handwriting input apparatus 10b can store the handwriting information modified in accordance with the user's intention.

Concretely, the touch panel control section 13b of the handwriting input apparatus 10b determines that a strikethrough pattern (a first pattern) has been inputted, in response to detecting an input action that a user writes on the sheet one or plural lines overlapped with handwriting information which has already inputted with the pen 41 or an input action that a user writes on the sheet a figure designating a certain region of the handwriting information which has already been inputted with the pen 41. In response to the determining result that the strikethrough pattern (the first pattern) has been inputted under the condition that the mode to delete a part of the handwriting information within the input region of the strikethrough 43 (the mode to delete a strikethrough 43), the control section 11 delete a part of the handwriting information within a rectangular region containing the one or more lines or within the region designated by the figure, together with one of the one or more lines and the figure, from the electronic data.

Further, when detecting an action that a user shuttles the eraser 42 on the handwriting information which has already been inputted or an action that a user traces the handwriting information which has already been inputted, by using the eraser 42, the touch panel control section 13a determines that an erasing operation with the eraser 42 (a second pattern) has been inputted. In response to the determining result that the erasing operation (the second pattern) has been inputted, the control section 11 deletes a part of the handwriting information overlapped with the locus of the pen 41 in the shuttling action or the tracing action, together with the locus of the pen 41 in the shuttling action or the tracing action, from the electronic data.

In this connection, the scope of the present invention is not limited to the embodiments aforementioned. In regard to the configuration of the handwriting input apparatus 10a or 10b and the control method for the same, various kinds of modifications and additions, made by a skilled person without departing from the spirit and scope of the invention, shall be included in the scope of the present invention.

For instance, although the aforementioned embodiment is so constituted that any one of the modification mode to erase a strikethrough, and the other modification mode not to erase a strikethrough, is to be selected in advance, it is also applicable that, at the time when the handwriting input apparatus 10a or 10b recognizes the strikethrough, the handwriting input apparatus 10a or 10b may allow a user to choose any one of the modification modes above-mentioned. In that case, the handwriting input apparatus provided with a display function may allow a user to choose the modification mode by displaying a selection window thereon, otherwise, the handwriting input apparatus provided with no display function may allow a user to choose the modification mode by beeping a sound or the like to prompt the user to choose the modification mode.

## Claims

1. A handwriting input apparatus comprising:
a touch panel (14a, 14b) configured to receive a handwriting input;
the handwriting input apparatus **characterized by** further comprising a control section (11) configured to
allow a user to choose a modification mode from a first mode and a second mode, the modification mode being used when a first pattern is inputted through the touch panel (14a, 14b) to be applied to handwriting information which has already been inputted, the first mode being a mode to delete the first pattern and a certain part of the handwriting information corresponding to the first pattern, the second mode being a mode to add the first pattern onto the handwriting information, and
in response to the touch panel (14a, 14b) receiving an input of the first pattern to be applied to handwriting information which has already been inputted, modify the handwriting information according to the modification mode which has been chosen.

2. The handwriting input apparatus of claim 1,
wherein the control section (11) is configured to, in response to the touch panel (14a, 14b) receiving an input of a second pattern to be applied to handwriting information which has already been inputted, the second pattern being different from the first pattern, delete the second pattern and a certain part of the handwriting information corresponding to the second pattern.

3. The handwriting input apparatus of claim 1 or 2,
wherein the touch panel (14a) includes a display section (141a) configured to display handwriting information which has been inputted on the touch panel (14a), based on display data,
the handwriting input apparatus further comprises a touch panel control section (13a) configured to determine that the first pattern has been inputted, in response to detecting an action performed on the touch panel (14a), the action being
an action that an user inputs with a pen one or more lines overlapping with handwriting information which has already been inputted on the touch panel (14a)
or
an action that an user inputs with a pen a figure to designate a certain region of handwriting information which has already been inputted on the touch panel (14a), and
the control section (11) is configured to, in response to the touch panel control section (13a) determining that the first pattern has been inputted under a condition that the first mode is chosen, delete the one or more lines or the figure together with a certain part of the handwriting information from the display data, the certain part being included in a rectangular region containing the one or more lines or in the region designated by the figure.

4. The handwriting input apparatus of claim 3,
wherein the touch panel control section (13a) is configured to determine that the second pattern has been inputted, in response to detecting an action performed on the touch panel (14a), the action being
a shuttling action that an user shuttles the pen on handwriting information which has already been inputted on the touch panel (14a) or
a tracing action that an user traces with the pen handwriting information which has already been inputted on the touch panel (14a), and
the control section (11) is configured to, in response to the touch panel control section (13a) determining that the second pattern has been inputted, delete a locus of the pen in the shuttling action or the tracing action together with a certain part of the handwriting information from the display data, the certain part being a part overlapping with the locus of the pen in the shuttle action or the tracing action.

5. The handwriting input apparatus of claim 1 or 2, further comprising
a base (50) for putting a sheet of paper thereon, the touch panel (14b) being formed on the base (50) and being configured to output electronic data including hardwiring information written onto the sheet with a pen, and
a touch panel control section (13b) configured to determine that the first pattern has been inputted, in response to detecting an action performed on the sheet, the action being
an action that an user writes with a pen one or more lines overlapping with handwriting information which has already been written on the sheet, or
an action that an user writes with a pen a figure to designate a certain region of handwriting information which has already been written on the sheet,
wherein the control section (11) is configured to, in response to the touch panel control section (13b) determining that the first pattern has been inputted under a condition that the first mode is chosen, delete the one or more lines or the figure together with a certain part of the handwriting information from the electronic data, the certain part being included in a rectangular region containing the one or more lines or in the region designated by the figure.

6. The handwriting input apparatus of claim 5,
wherein the touch panel control section (13b) is configured to determine that the second pattern has been inputted, in response to detecting an action performed on the sheet, the action being
a shuttling action that an user shuttles an eraser on handwriting information which has already been written on the sheet, or
a tracing action that an user traces with an eraser handwriting information which has already been written on the sheet, and
the control section (11) is configured to, in response to the touch panel control section (13b) determining that the second pattern has been inputted, delete a locus of the eraser in the shuttling action or the tracing action together with and a certain part of the handwriting information from the electronic data, the certain part being a part overlapping with the locus of the eraser in the shuttle action or the tracing action.

7. A non-transitory computer-readable storage medium storing a control program to be executed in a handwriting input apparatus including a touch panel (14a, 14b) configured to allow a user to perform a handwriting input thereon, the control program **characterized by**, when being executed by a processor of the handwriting input apparatus, causing the processor to perform processes comprising:
allowing a user to choose a modification mode from a first mode and a second mode, the modification mode being used when a first pattern is inputted through the touch panel (14a, 14b) to be applied to handwriting information which has already been inputted, the first mode being a mode to delete the first pattern and a certain part of the handwriting information corresponding to the first pattern, the second mode being a mode to add the first pattern onto the handwriting information;
determining whether an input received through the touch panel (14a, 14b) is an input to be applied to handwriting information which has already been inputted; and
modifying the handwriting information in response to determining that the input to be applied to the handwriting information has been received,
wherein the modifying the handwriting information includes, modifying the handwriting information according to the modification mode which has been chosen, in response to determining that an input of the first pattern to be applied to the handwriting information has been received, as a result of the determining the input received through the touch panel (14a, 14b).

8. The non-transitory computer-readable storage medium of claim 7,
wherein the modifying the handwriting information includes, deleting a second pattern and a certain part of the handwriting information corresponding to the second pattern, in response to determining that an input of the second pattern to be applied to the handwriting information has been received, as the result of the determining the input received through the touch panel (14a, 14b), the second pattern being different from the first pattern.

9. The non-transitory computer-readable storage medium of claim 7 or 8,
wherein the touch panel (14a) includes a display section (141a) configured to display handwriting information which has been inputted on the touch panel (14a), based on display data,
the determining the input received through the touch panel (14a) includes, determining that the first pattern has been inputted, in response to detecting an action performed on the touch panel (14a), the action being
an action that an user inputs with a pen one or more lines overlapping with handwriting information which has already been inputted on the touch panel (14a) or
an action that an user inputs with a pen a figure to designate a certain region of handwriting information which has already been inputted on the touch panel (14a),and
the modifying the handwriting information includes, in response to determining that the first pattern has been inputted under a condition that the first mode is chosen, deleting the one or more lines or the figure together with a certain part of the handwriting information from the display data, the certain part being included in a rectangular region containing the one or more lines or in the region designated by the figure.

10. The non-transitory computer-readable storage medium of claim 9,
wherein the determining the input received through the touch panel (14a) includes, determining that the second pattern has been inputted, in response to detecting an action performed on the touch panel (14a), the action being
a shuttling action that an user shuttles the pen on handwriting information which has already been inputted on the touch panel (14a) or
a tracing action that an user traces with the pen handwriting information which has already been inputted on the touch panel (14a), and
the modifying the handwriting information includes, in response to determining that the second pattern has been inputted, deleting a locus of the pen in the shuttling action or the tracing action together with a certain part of the handwriting information from the display data, the certain part being a part overlapping with the locus of the pen in the shuttle action or the tracing action.

11. The non-transitory computer-readable storage medium of claim 7 or 8,
wherein the handwringing input apparatus further includes a base (50) for putting a sheet of paper thereon, the touch panel (14b) being formed on the base (50) and being configured to output electronic data including hardwiring information written onto the sheet with a pen,
the determining the input received through the touch panel (14b) includes, determining that the first pattern has been inputted, in response to detecting an action performed on the sheet, the action being
an action that an user writes with a pen one or more lines overlapping with handwriting information which has already been written on the sheet, or
an action that an user writes with a pen a figure to designate a certain region of handwriting information which has already been written on the sheet, and
the modifying the handwriting information includes, in response to determining that the first pattern has been inputted under a condition that the first mode is chosen, deleting the one or more lines or the figure together with a certain part of the handwriting information from the electronic data, the certain part being included in a rectangular region containing the one or more lines or in the region designated by the figure.

12. The non-transitory computer-readable storage medium of claim 11,
wherein the determining the input received through the touch panel (14b) includes, determining that the second pattern has been inputted, in response to detecting an action performed on the sheet, the action being
a shuttling action that an user shuttles an eraser on handwriting information which has already been written on the sheet, or
a tracing action that an user traces with an eraser handwriting information which has already been written on the sheet, and
the modifying the handwriting information includes, in response to determining that the second pattern has been inputted, delete a locus of the eraser in the shuttling action or the tracing action together with and a certain part of the handwriting information from the electronic data, the certain part being a part overlapping with the locus of the eraser in the shuttle action or the tracing action.

13. A control method of a handwriting input apparatus including a touch panel (14a, 14b) configured to receive a handwriting input, the control method **characterized by** comprising:
allowing a user to choose a modification mode from a first mode and a second mode, the modification mode being used when a first pattern is inputted through the touch panel (14a, 14b) to be applied to handwriting information which has already been inputted, the first mode being a mode to delete the first pattern and a certain part of the handwriting information corresponding to the first pattern, the second mode being a mode to add the first pattern onto the handwriting information;
determining whether an input received through the touch panel (14a, 14b) is an input to be applied to handwriting information which has already been inputted; and
modifying the handwriting information in response to determining that the input to be applied to the handwriting information has been received,
wherein the modifying the handwriting information includes, modifying the handwriting information according to the modification mode which has been chosen, in response to determining that an input of the first pattern to be applied to the handwriting information has been received, as a result of the determining the input received through the touch panel (14a, 14b).

14. The control method of claim 13,
wherein the modifying the handwriting information includes, deleting a second pattern and a certain part of the handwriting information corresponding to the second pattern, in response to determining that an input of the second pattern to be applied to the handwriting information has been received, as the result of the determining the input received through the touch panel (14a, 14b), the second pattern being different from the first pattern.

15. The control method of claim 13 or 14,
wherein the touch panel (14a) includes a display section (141a) configured to display handwriting information which has been inputted on the touch panel (14a), based on display data,
the determining the input received through the touch panel (14a) includes, determining that the first pattern has been inputted, in response to detecting an action performed on the touch panel (14a), the action being
an action that an user inputs with a pen one or more lines overlapping with handwriting information which has already been inputted on the touch panel (14a) or
an action that an user inputs with a pen a figure to designate a certain region of handwriting information which has already been inputted on the touch panel (14a), and
the modifying the handwriting information includes, in response to determining that the first pattern has been inputted under a condition that the first mode is chosen, deleting the one or more lines or the figure together with a certain part of the handwriting information from the display data, the certain part being included in a rectangular region containing the one or more lines or in the region designated by the figure.

16. The control method of claim 15,
wherein the determining the input received through the touch panel (14a) includes, determining that the second pattern has been inputted, in response to detecting an action performed on the touch panel (14a), the action being
a shuttling action that an user shuttles the pen on handwriting information which has already been inputted on the touch panel (14a) or
a tracing action that an user traces with the pen handwriting information which has already been inputted on the touch panel (14a), and
the modifying the handwriting information includes, in response to determining that the second pattern has been inputted, deleting a locus of the pen in the shuttling action or the tracing action together with a certain part of the handwriting information from the display data, the certain part being a part overlapping with the locus of the pen in the shuttle action or the tracing action.

17. The control method of claim 13 or 14,
wherein the handwringing input apparatus further includes a base (50) for putting a sheet of paper thereon, the touch panel (14b) being formed on the base (50) and being configured to output electronic data including hardwiring information written onto the sheet with a pen,
the determining the input received through the touch panel (14b) includes, determining that the first pattern has been inputted, in response to detecting an action performed on the sheet, the action being
an action that an user writes with a pen one or more lines overlapping with handwriting information which has already been written on the sheet, or
an action that an user writes with a pen a figure to designate a certain region of handwriting information which has already been written on the sheet, and
the modifying the handwriting information includes, in response to determining that the first pattern has been inputted under a condition that the first mode is chosen, deleting the one or more lines or the figure together with a certain part of the handwriting information from the electronic data, the certain part being included in a rectangular region containing the one or more lines or in the region designated by the figure.

18. The control method of claim 17,
wherein the determining the input received through the touch panel (14b) includes, determining that the second pattern has been inputted, in response to detecting an action performed on the sheet, the action being
a shuttling action that an user shuttles an eraser on handwriting information which has already been written on the sheet, or
a tracing action that an user traces with an eraser handwriting information which has already been written on the sheet, and
the modifying the handwriting information includes, in response to determining that the second pattern has been inputted, delete a locus of the eraser in the shuttling action or the tracing action together with and a certain part of the handwriting information from the electronic data, the certain part being a part overlapping with the locus of the eraser in the shuttle action or the tracing action.
